# EUROPEAN PATENT SPECIFICATION

(11) **EP 3 836 572 B1**
(45) Date of publication and mention of the grant of the patent: **21.06.2023**
(21) Application number: 18929947.2
(22) Date of filing: 17.08.2018
(51) Int. Cl.: H04W 4/02, H04W 8/26, H04W 4/029

(54) **METHOD OF ACQUIRING IDENTIFIER OF TERMINAL DEVICE AND NETWORK ELEMENT**
VERFAHREN ZUR IDENTIFIKATORERFASSUNG EINES ENDGERÄTES UND NETZELEMENT
PROCÉDÉ D'ACQUISITION D'IDENTIFIANT DE DISPOSITIF TERMINAL ET ÉLÉMENT DE RÉSEAU

(43) Date of publication of application: 16.06.2021
(73) Proprietor: Huawei Technologies Co., Ltd., Longgang Shenzhen, Guangdong 518129 (CN)
(72) Inventor: CHEN, Yuchen, Shenzhen, Guangdong 518129 (CN); WEI, Yuejun, Shenzhen, Guangdong 518129 (CN); YANG, Weiqiang, Shenzhen, Guangdong 518129 (CN); MA, Liang, Shenzhen, Guangdong 518129 (CN)
(74) Representative: Grünecker Patent- und Rechtsanwälte PartG mbB
(86) International application number: PCT/CN2018/101140
(87) International publication number: WO 2020/034211

(56) References cited:
- EP-A1- 2 320 685
- WO-A1-2013/063741
- WO-A1-2014/039240
- CN-A- 101 729 980
- CN-A- 102 076 085
- CN-A- 106 161 809
- CN-A- 106 535 131
- JP-A- 2008 103 907
- US-A1- 2013 179 114

## Description

### TECHNICAL FIELD

This application relates to the communications field, and more specifically, to a method for obtaining an identifier of a terminal device, and a network element.

### BACKGROUND

With development of science and technology, a communications device being used by a suspect is usually used to obtain related evidence information during case investigation. For example, after positioning a suspect, police usually listen to a call on the suspect's mobile phone to obtain key clues to assist in case investigation. JP2008103907A relates to the problem of specifying an important witness terminal by using location information on a mobile terminal in case of emergency and tracking its movement. WO 2014/039240 A1 relates to identifying a suspect at a crime scene, and more particularly to a method and apparatus for identifying a suspect through multiple correlated location and time events. However, a cunning suspect frequently changes a mobile phone to avoid being tracked. As a result, although police can visually position the suspect remotely, it is difficult to quickly and accurately obtain a mobile phone number used by the suspect and listen to a call on the suspect's mobile phone, thereby missing key clues and delaying case investigation. Therefore, how to obtain an identifier of a terminal device used by a user becomes a problem that urgently needs to be resolved. US 2013/179114 discloses a computer-implemented method for determining the location of a target device such as a smart phone that involves forwarding a calculated location of the target device, when the location accuracy received for the target device is not within an accuracy threshold. EP 2 320 685 discloses a mobile communication device such as a cellular phone that comprises an emergency locator component receiving emergency location response messages and determining location information for the device based on the received response messages.

### SUMMARY

This application provides a method for obtaining an identifier of a terminal device, and a network element, to accurately obtain an identifier of a terminal device used by a user. The invention is defined according to the independent claims. The dependent claims recite advantageous embodiments of the invention.

### BRIEF DESCRIPTION OF DRAWINGS

FIG. 1 is a schematic diagram of a system 100 to which a method for obtaining an identifier of a terminal device according to an embodiment of this application is applicable;
FIG. 2 is a positioning flowchart;
FIG. 3 is a schematic diagram of a method for obtaining an identifier of a terminal device according to this application;
FIG. 4 is a flowchart of determining an identifier set by a first network element;
FIG. 5 is another flowchart of determining an identifier set by a first network element;
FIG. 6 is a schematic diagram of a specific embodiment of a method for obtaining an identifier of a terminal device according to an embodiment of this application;
FIG. 7 is a schematic block diagram of a first network element according to an embodiment of this application;
FIG. 8 is a schematic block diagram of a second network element according to an embodiment of this application;
FIG. 9 is a schematic block diagram of a third network element according to an example not being part of the present application but helpful for understanding this application;
FIG. 10 is another schematic block diagram of a first network element according to an embodiment of this application;
FIG. 11 is another schematic block diagram of a second network element according to example not being part of the present application but helpful for understanding this application; and
FIG. 12 is another schematic block diagram of a third network element according to an example not being part of the present application but helpful for understanding this application.

### DESCRIPTION OF EMBODIMENTS

The following describes technical solutions of this application with reference to accompanying drawings.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may camp within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

It should be understood that the embodiments of this application may be used in various communications systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an advanced long term evolution (advanced long term evolution, LTE-A) system, a universal mobile telecommunications system (universal mobile telecommunications system, UMTS), a wireless local area network (wireless local area network, WLAN), wireless fidelity (wireless fidelity, Wi-Fi), or a next-generation communications system. Herein, the next-generation communications system may include, for example, a fifth-generation (fifth-generation, 5G) communications system.

Usually, a conventional communications system supports a limited quantity of connections, and is easy to implement. However, with development of communications technologies, a mobile communications system not only supports conventional communication, but also supports, for example, device-to-device (device to device, D2D) communication, machine-to-machine (machine, machine to machine, M2M) communication, machine type communication (machine type communication, MTC), and vehicle-to-vehicle (vehicle to vehicle, V2V) communication.

The embodiments of this application describe the embodiments with reference to a terminal device.

The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like. The terminal device may be a station (station, ST) in WLAN, and may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, and a next-generation communications system, for example, a terminal device in a 5G network, or a terminal device in a future evolved public land mobile network (public land mobile network, PLMN).

As an example rather than a limitation, in the embodiments of this application, the terminal device may be alternatively a wearable device. The wearable device may also be referred to as a wearable intelligent device. The wearable intelligent device is a collective name of wearable devices, such as glasses, a glove, a watch, clothing, and shoes, obtained by performing intelligent design and development on daily wearables by using a wearable technology. The wearable device is a portable device that is directly put on human body or is integrated with clothing or an accessory of a user. The wearable device is not merely a hardware device, but further implements a powerful function through software support, data exchange, and cloud-based interaction. In a broad sense, wearable intelligent devices include a device that provides a complete function, has a large size, and can implement all or some functions without relying on a smartphone, for example, a smartwatch or smart glasses; and include a device that focuses only on a specific type of application function and needs to be used in combination with another device such as a smartphone, for example, various smart bands and smart jewelry used for vital sign monitoring.

In addition, in the embodiments of this application, the terminal device may be alternatively a terminal device in an internet of things (internet of things, IoT) system. IoT is an important component of future information technology development. A main technical feature of the IoT is to connect an object to a network by using a communications technology, to implement an intelligent network of human-computer interconnection and inter-thing interconnection.

As an example rather than a limitation, in the embodiments of this application, the network device may be a base station (base station, BS), and the base station may be in a plurality of forms, for example, a macro base station, a micro base station, a relay station, and an access point.

For example, the base station in the embodiments of this application may be a base station in NR, where the base station in NR may also be referred to as a transmission and reception point (transmission and reception point, TRP) or a next-generation NodeB (next generation NodeB, gNB); or may be a base transceiver station (base transceiver station, BTS) in GSM or CDMA; or may be a NodeB (NodeB, NB) in a WCDMA system; or may be an evolved NodeB (evolved NodeB, eNB or eNodeB) in an LTE system.

The network device in the embodiments of this application may alternatively include a device that is deployed in a radio access network and that can wirelessly communicate with a terminal.

For example, the network device may be a radio controller in a cloud radio access network (cloud radio access network, CRAN) scenario; or the network device may be a relay station, an access point, a network device in a future 5G network, a network device in a future evolved public land mobile network (public land mobile network, PLMN), or the like, for example, an evolved NodeB (evolved NodeB, eNB), a radio network controller (radio network controller, RNC), a NodeB (NodeB, NB), a base station controller (base station controller, BSC), a base transceiver station (base transceiver station, BTS), a home network device (for example, a home evolved NodeB, or a Home NodeB, HNB), or a baseband unit (baseband unit, BBU). In the embodiments of this application, an apparatus that implements a function of a network device may be a network device; or may be an apparatus that supports a network device in implementing the function, for example, a chip, a circuit, or another apparatus. In the embodiments of this application, the technical solutions provided in the embodiments of this application are described by using an example in which the apparatus that implements a function of a network device is a network device.

In addition, in the embodiments of this application, the network device provides a service for a cell, and the terminal device communicates with the network device by using a transmission resource (for example, a frequency domain resource, in other words, a spectrum resource) used by the cell. The cell may be a cell corresponding to the network device (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have features of a small coverage range and a low transmit power, and are suitable for providing high-rate data transmission services.

In addition, a plurality of cells may simultaneously work on a carrier at a same frequency in an LTE system or a 5G system. In some special scenarios, it may also be considered that a concept of the carrier is the same as that of a cell. For example, in a carrier aggregation (carrier aggregation, CA) scenario, when a secondary carrier is configured for UE, both a carrier index of the secondary carrier and a cell identifier (cell identifier, Cell ID) of a secondary cell working on the secondary carrier are carried. In this case, it may be considered that a concept of a carrier is the same as that of a cell. For example, UE accessing a carrier is equivalent to UE accessing a cell.

In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in the embodiments of this application is not particularly limited in the embodiments of this application, provided that the entity can run a program that records code of the method provided in the embodiments of this application to perform communication according to the method provided in the embodiments of this application. For example, the entity for performing the method provided in the embodiments of this application may be a terminal device, a network device, or a functional module that is in a terminal device or a network device and that can invoke and execute the program.

In addition, aspects or features in the embodiments of this application may be implemented as a method, an apparatus or a product that uses standard programming and/or engineering technologies. The term "product" used in this application covers a computer program that can be accessed from any computer readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

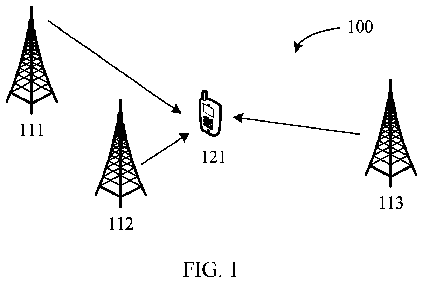

FIG. 1 is a schematic diagram of a system 100 to which a method for obtaining an identifier of a terminal device according to an embodiment of this application is applicable.

As shown in FIG. 1, the wireless communications system 100 may include one or more network devices, for example, a network device #1 111, a network device #2 112, and a network device #3 113 shown in FIG. 1. The wireless communications system 100 may further include one or more terminal devices, for example, a terminal device 121 shown in FIG. 1.

The wireless communications system 100 may also support coordinated multipoint transmission/reception (coordinated multipoint transmission/reception, CoMP). To be specific, a plurality of cells or a plurality of network devices may collaboratively participate in data transmission with one terminal device or jointly receive data sent by one terminal device, or a plurality of cells or a plurality of network devices perform coordinated scheduling or coordinated beamforming. The plurality of cells may belong to a same network device or different network devices, and may be selected based on a channel gain or a path loss, received signal strength, a received signal instruction, and the like.

Optionally, in the communications system 100 shown in FIG. 1, one of the network device #1 to the network device #3 (for example, the network device #1) may be a serving network device. The serving network device may be a network device that provides at least one of the following services for a terminal device by using a radio air interface protocol: an RRC connection, non-access stratum (non-access stratum, NAS) mobility management, and security input. Optionally, the network device #2 and the network device #3 each may be a coordinating network device. The serving network device may send control signaling to the terminal device, and the coordinating network device may send data to the terminal device. Alternatively, the serving network device may send control signaling to the terminal device, and the serving network device and the coordinating network device may send data to the terminal device. Alternatively, both the serving network device and the coordinating network device may send control signaling to the terminal device, and both the serving network device and the coordinating network device may send data to the terminal device. Alternatively, the coordinating network device may send control signaling to the terminal device, and at least one of the serving network device and the coordinating network device may send data to the terminal device. Alternatively, the coordinating network device may send control signaling and data to the terminal device. This is not particularly limited in the embodiments of this application.

It should be understood that, only for ease of understanding, FIG. 1 schematically shows the network device #1 to the network device #3 and the terminal device, but this does not constitute any limitation on this application. The wireless communications system may alternatively include more or fewer network devices, or may include more terminal devices. Network devices that communicate with different terminal devices may be a same network device or different network devices, and quantities of network devices that communicate with different terminal devices may be the same or different. This is not limited in this application.

The following briefly describes communication between a network device and a terminal device by using the network device #1 111 and the terminal device 121 as examples.

The network device #1 111 may include one or more antennas. In addition, the network device #1 111 may additionally include a transmitter chain and a receiver chain. A person of ordinary skill in the art can understand that the transmitter chain and the receiver chain each may include a plurality of components (for example, a processor, a modulator, a multiplexer, a demodulator, a demultiplexer, or an antenna) related to signal sending and receiving.

The network device #1 111 may communicate with a plurality of terminal devices. For example, the terminal device 121 may be a cellular phone, a smartphone, a portable computer, a handheld communications device, a handheld computing device, a satellite radio apparatus, a global positioning system, a PDA, and/or any other suitable device configured to perform communication in the wireless communications system 100.

As shown in FIG. 1, the terminal device 121 communicates with the network device #1 111. The network device #1 111 sends information to the terminal device 121 through a forward link (also referred to as a downlink), and the network device #1 111 receives information from the terminal device 121 through a reverse link (also referred to as an uplink).

For example, in a frequency division duplex (frequency division duplex, FDD) system, different frequency bands are used for a forward link and a reverse link.

For another example, in a time division duplex (time division duplex, TDD) system and a full duplex (full duplex) system, a same frequency band may be used for a forward link and a reverse link.

Each antenna (or an antenna group including a plurality of antennas) and/or area designed for communication are/is referred to as a sector of the network device #1 111.

For example, the antenna group may be designed to communicate with a terminal device in a sector in a coverage area of the network device #1 111. The network device # 1 111 may send, by using a single antenna or multi-antenna transmit diversity, a signal to all terminal devices in a sector corresponding to the network device #1 111. In a process in which the network device #1 111 communicates with the terminal device 121 through the forward link, a transmit antenna of the network device #1 111 may also increase a signal-to-noise ratio of the forward link through beamforming.

In addition, compared with the manner in which the network device #1 111 sends a signal to all terminal devices of the network device #1 111 by using a single antenna or multi-antenna transmit diversity, when the network device # 1 111 sends, through beamforming, a signal to terminal devices 121 randomly dispersed in a related coverage area, a mobile device in a neighboring cell encounters less interference.

In a given time, the network device #1 111 and the terminal device 121 may be a wireless communications sending apparatus and/or a wireless communications receiving apparatus. When sending data, the wireless communications sending apparatus may encode the data for transmission. Specifically, the wireless communications sending apparatus may obtain (for example, generate, receive from another communications apparatus, or store in a memory) a specific quantity of data bits that need to be sent to the wireless communications receiving apparatus through a channel. The data bits may be included in a transport block (or a plurality of transport blocks) of the data, and the transport block may be segmented to generate a plurality of code blocks.

In addition, the communications system 100 may be a PLMN network, a D2D network, an M2M network, an IoT network, or another network.

It should be understood that FIG. 1 is only a simplified schematic diagram as an example, and the communications system may further include another network device or terminal device not shown in FIG. 1.

Specifically, FIG. 1 may further include another network element or another unit required for positioning the terminal device 121. The following briefly describes network elements, other than the foregoing network devices, that are required for positioning the terminal device 121 and that are not shown in FIG. 1.

An example is a mobility management network element, or referred to as a mobility management entity (mobility management entity, MME). Functions of the MME mainly include the following aspects:
1. Access control for a terminal device, including security and permission control.
2. Mobility management:

A mobile network needs to clearly know current location information of a terminal device. This is no exception to an evolved packet core (evolved packet core, EPC) network.

A location area in the EPC network is referred to as a tracking area (tracking area, TA). The TA is similar to a location area (location area, LA) in capacity memory control system (capacity memory control system, MSCS) management and a routing area (routing area, RA) in service GPRS supporting node (service GPRS supporting node, SGSN) management, and is used for mobility management for a terminal device in the EPC network.

Based on different scenarios, mobility management may be classified into a location update between different network devices within one MME, a location update between different MMEs, a periodic location update, and the like. A result of success of all the location updates is that a terminal device notifies a network device of a current location area TA in which the terminal device is located, and the TA is recorded on an MME and a home subscriber server (home subscriber server, HSS) network element.

### 3. Attachment and detachment:

Before performing an actual service, a terminal device needs to perform a process of registering with a network device. This process is referred to as attachment. A terminal successfully attached obtains an Internet protocol (internet protocol, IP) address allocated by the network device, and the IP address provides an "always online" IP connection. Different from a conventional 2/3G network, in an EPS network, a default bearer is directly established for a terminal device through initial attach. However, in the 2/3 G network, a terminal device needs to perform a process of activating a programmed data processor (programmed data processor, PDP) context after attachment, so that an IP address is allocated to the terminal device.

When a terminal device does not need to or can no longer be attached to a network, a detachment procedure is initiated. Based on different initiators, detachment may be initiated by the terminal device, an MME, or an HSS. The MME may initiate the detachment because the terminal device has not interacted with a network device for a long time. The HSS initiates the detachment because the network device actively disconnects from the terminal device due to subscription or charging information of the terminal device, or the like. Based on whether the terminal device is successfully notified, explicit detachment and implicit detachment are further distinguished. Explicit detachment means that the network device and the terminal device notify each other by using signaling. Implicit detachment is a case in which the detachment is actively initiated by the network device but the terminal device cannot be notified due to a limitation of a radio condition.

### 4. Session management function:

The session management function includes: establishing, modifying, and releasing an EPC bearer; during interaction with a 2G/3G network, performing effective mapping between an EPC bearer and a PDP context; establishing and releasing an access-network-side bearer; and selecting an appropriate route based on an access point name (access point name, APN) and user subscription data.

### 5. Selection of a signaling gateway (signal gateway, SGW) and a PDN gateway (PDN gateway, PGW):

When a terminal device has a data service request, an MME needs to select an SGW or a PGW to forward a data packet of the terminal device.

Generally, the MME is similar to a control plane function of an SGSN network element. Separation of the control plane function and a user plane function of the network element facilitates flattened network deployment. In addition to the foregoing functions such as mobility management, the MME is further responsible for managing lawful interception, subscriber roaming control, security authentication, and other aspects.

A gateway mobile location center (gateway mobile location center, GMLC) network element is a first node accessed by an external unknown program when the external unknown program accesses a GSM PLMN, and is configured to perform registration authorization check and request routing information from a home location register (home location register, HLR). One PLMN may have a plurality of GMLCs.

An evolved serving mobile location center (evolved serving mobile location center, E-SMLC) network element is configured to convert a location requirement of a request of a terminal device into a corresponding universal terrestrial radio access network (universal terrestrial radio access network, UTRAN) measurement parameter, select a positioning method, and calculate a final result and precision based on a returned location estimation.

A location measurement unit (location measurement unit, LMU) is an important measurement unit for measuring a radio signal, and is configured to perform positioning measurement. The LMU may measure UL and DL signals in a UTRAN, and may obtain positioning information of a terminal device or parameters related to positioning calculation from the signals. LMUs are classified into the following two types.

Stand-alone LMU (stand-alone LMU): similar to a mobile terminal. This type of LMU is wirelessly connected to a base station. An air interface between the LMU and a terminal device and an air interface between the LMU and the base station are known, and are both uu interfaces. However, the LMU is incapable of communicating with another terminal device, but can exchange data only with a specific base station. Apparently, a placement location of the stand-alone LMU is comparatively flexible, and the stand-alone LMU may be at any location in a service area of the base station. In addition, there may be a plurality of stand-alone LMUs in one service area.

Associated LMU (associated LMU): similar to a base station. In physical implementation, this type of LMU may be integrated in a base station, or may be disposed separately. An interface between the associated LMU and an RNC and an interface between the base station and the RNC are known, and are both Iub interfaces.

For ease of understanding the technical solutions described in this application, several methods for obtaining an identifier of a terminal device in the prior art are briefly described first.

A method for determining a suspect's mobile phone number is as follows: mounting a rogue base station to a camera, and establishing a connection to a mobile phone by using the rogue base station, to obtain information about a suspect's mobile phone; and determining the suspect's mobile phone number based on a coverage range of the camera and the rogue base station.

However, in the foregoing method, rogue base stations cannot be deployed on a large scale. If rogue base stations are deployed on all camera poles, great interference is caused to public network devices of operators, thereby affecting normal use of mobile phones by users. In addition, a deployment range of cameras is also limited, and this method cannot be performed in locations in which no camera is deployed.

Further, positioning accuracy in the foregoing method is not high. A reason is that matching is performed between a mobile phone number and the suspect by overlapping an estimation of a coverage range of the rogue base station with a coverage range of the camera.

However, most rogue base stations do not have a positioning function of a base station, and have very low positioning accuracy. In addition, usually, the coverage range of the rogue base station can hardly perfectly overlap the coverage range of the surveillance camera, thereby causing great difficulty in performing matching between the suspect and a mobile phone number.

In addition, a current cellular network has a positioning function, and can position a terminal device.

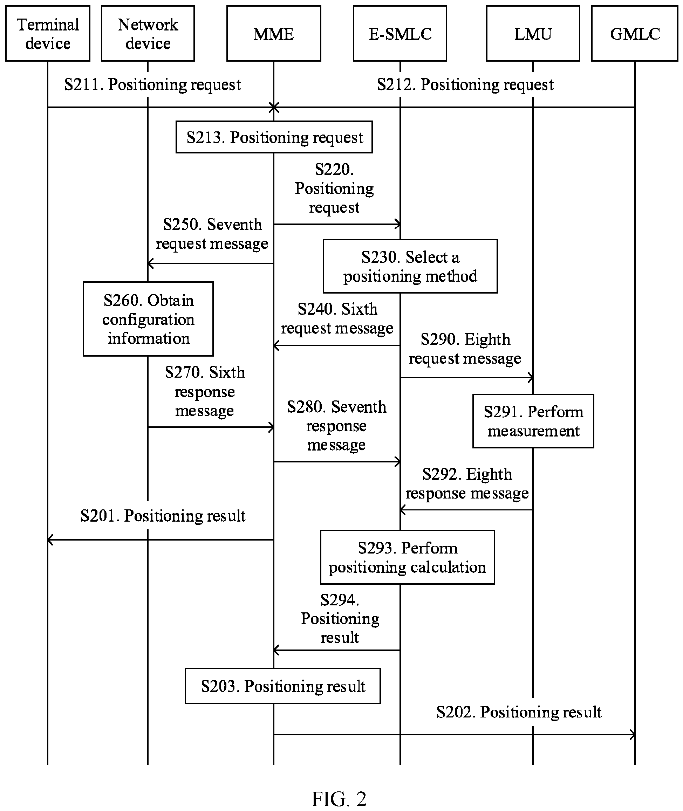

The following briefly describes a positioning procedure in a cellular network with reference to FIG. 2. FIG. 2 is a positioning flowchart.

Optionally, in S211, a terminal device initiates a positioning request to an MME.

Optionally, in S212, a GMLC initiates a positioning request to an MME.

Optionally, in S213, an MME initiates a positioning request.

It should be understood that S210, S211, and S213 are several possibilities in which a positioning request can be initiated in a cellular network. To be specific, when there is a positioning requirement, a terminal device may initiate a positioning request, or some network elements (for example, the GMLC or the MME shown in FIG. 2) in an EPC may initiate a positioning request.

S220. The MME initiates a positioning request to an E-SMLC.

It should be understood that, when the MME receives a positioning request from another entity (for example, the UE or the GMLC), or a positioning requirement unit in the MME initiates a positioning request, the MME needs to forward the positioning request to an E-SMLC network element in a core network. The E-SMLC network element can provide a positioning method, and calculate a final result and precision.

S230. The E-SMLC selects a positioning method.

Specifically, after receiving the positioning request, the E-SMLC network element selects a positioning method to perform positioning calculation.

Specifically, positioning methods include:
1. network-based positioning technology: a method based on a cell identifier (cell identifier, cell ID) and a timing advance, an uplink time of arrival method, an uplink signal time difference of arrival method, and an uplink angle of arrival method;
2. mobile station-based positioning methods: a downlink enhanced observed time difference (enhanced observed time difference, E-OTD) positioning method for GSM, a method by observing a difference of arrival times in a downlink idle period for WCDMA, and the like; and
3. satellite positioning systems represented by a global positioning system (global positioning system, GPS), a global navigation satellite system (global navigation satellite system, GLONASS), a Galileo spacecraft (GALILEO), a BeiDou navigation satellite system (BEIDOU), a quasi-zenith satellite system (quasi zenith satellite system, QZSS), and the like, where auxiliary devices for satellite positioning are integrated on a mobile station side and a network device side.

It should be understood that selection of a positioning method is not limited in this embodiment of this application, and any positioning method in the prior art may be used.

S240. The E-SMLC sends a sixth request message to the MME.

Specifically, the sixth request message carries information for requesting configuration information required for the positioning method selected by the E-SMLC.

For example, the positioning method selected by the E-SMLC in S230 is the uplink signal time difference of arrival (uplink time difference of arrival, UTDOA) method.

In this case, the E-SMLC sends connection oriented transfer information (connection oriented transfer information) to the MME by using an LTE positioning protocol annex (LTE positioning protocol annex, LPPa). The connection oriented transfer information carries uplink signal time difference of arrival request information (UTDOA information request).

It should be understood that the foregoing UTDOA positioning method may also be referred to as a UTOA positioning method, and a network device measures a time at which a signal of a mobile terminal device arrives.

In the method, at least three network devices are required to participate in measurement, a location measurement unit LMU is added to each network device, and the LMU measures an arrival moment of an access burst or a normal burst sent by a terminal device.

Specifically, a time difference of arrival (time difference of arrived, TDOA) measures a difference between transmission times at which a signal transmitted by a mobile terminal device arrives at different BTSs, but not merely a transmission time.

It should be understood that the LPPa is a peer-layer positioning protocol between a base station and a positioning server, and is used to exchange positioning-related information, for example, multi-cell information and measurement information provided by the base station.

S250. The MME sends a seventh request message to the network device.

Specifically, after receiving the sixth request message, the MME parses the sixth request message, and sends the seventh request message to the network device based on the sixth request message. The seventh request message carries the information for requesting the configuration information required for the positioning method selected by the E-SMLC.

For example, the positioning method selected by the E-SMLC in S230 is the UTDOA.

In this case, the MME sends downlink terminal device associated LPPa transport (downlink UE associated LPPa transport) that carries a UTDOA information request to the network device. The UTDOA information request is used to obtain requested SRS transmission characteristics (requested SRS transmission characteristics) information of the positioned terminal device. An SRS is a sounding reference signal (sounding reference signal, SRS).

It should be understood that there may be a plurality of network devices in this embodiment of this application, that is, the MME sends a second request message to the plurality of network devices.

S260. The network device obtains the configuration information.

Specifically, after receiving the seventh request message, the network device determines, based on the information carried in the seventh request message, the configuration information required for implementing the positioning method, and further obtains the related configuration information.

For example, the information carried in the seventh request message is the UTDOA information request.

In this case, the network device receives the UTDOA information request, measures and collects a type 1 TA (Type 1 TA) and a type 2 TA (Type 2 TA) of the terminal device, and allocates a narrowband physical random access channel (narrowband physical random access channel, NPRACH) resource to the terminal device based on a specific bandwidth and period.

It should be understood that a TA may be calculated by adding a time difference between receiving and sending of the terminal device that is reported by the terminal device to a time difference between receiving and sending that is measured by the network device (a TA calculated by using this method is referred to as a TA Type 1), or may be measured by the network device by using a dedicated random access process (a TA calculated by using this method is referred to as a TA Type 2).

It should be understood that there may be a plurality of network devices in this embodiment of this application, that is, all the plurality of network devices may obtain the foregoing configuration information.

S270. The network device sends a sixth response message to the MME.

Specifically, after obtaining the foregoing parameters, the network device sends the corresponding configuration information to the MME.

For example, the network device sends uplink associated LPPa transport (uplink UE associated LPPa transport) that carries time difference response information (UTDOA information response) to the MME.

S280. The MME sends a seventh response message to the E-SMLC.

Specifically, after receiving the foregoing parameters, the MME sends the corresponding configuration information to the E-SMLC.

For example, the MME sends a UTDOA information response to the E-SMLC.

S290. The E-SMLC sends an eighth request message to the LMU.

Specifically, after receiving the seventh response message, the E-SMLC obtains the corresponding configuration information, and then sends the eighth request message to the LMU, where the eighth request message includes the configuration information, to request the LMU to perform corresponding measurement.

For example, the E-SMLC sends a service level management (Service Level Management, SLm) protocol measurement request (measurement request) message to the LMU on which SRS measurement needs to be performed. The measurement request message includes UL RTOA Measurement Configuration configuration information, and requests UL RTOA measurement.

Specifically, the LMU is a measurement unit in the network device.

S291. The LMU performs measurement.

Specifically, after receiving the eighth request message, the LMU obtains the corresponding configuration information and performs measurement.

For example, after receiving the measurement request, the LMU parses NPRACH configuration information of the terminal device, and performs UL RTOA measurement.

S292. The LMU sends an eighth response message to the E-SMLC.

Specifically, after completing measurement, the LMU sends a measurement result to the E-SMLC by using the eighth response message.

For example, after completing UL RTOA measurement, the LMU sends a measurement result to the E-SMLC by using an SLm protocol MEASUREMENT RESPONSE message.

S293. The E-SMLC performs positioning calculation.

For example, the E-SMLC performs UTDOA positioning calculation.

S294. The E-SMLC sends a positioning result to the MME.

Specifically, the positioning result includes success, failure, error information, and the like.

S201. The MME sends the positioning result to the terminal device.

It should be understood that S201 corresponds to S211. When the terminal device initiates the positioning request, the MME sends the positioning result to the terminal device.

S202. The MME sends the positioning result to the GMLC.

It should be understood that S202 corresponds to S212. When the GMLC initiates the positioning request, the MME sends the positioning result to the GMLC.

Further, the GMLC may then return the result to a server platform.

For example, the GMLC may then return the result to a dedicated network server for public security.

S203. The MME sends the positioning result to the MME.

It should be understood that S203 corresponds to S213. When the MME initiates the positioning request, the MME sends the positioning result to the MME.

It can be learned from the positioning procedure shown in FIG. 2 that, during positioning in the cellular network, an identifier of a terminal device can be input to obtain a location of the corresponding terminal device, but an identifier of a terminal device cannot be obtained by inputting a location of the terminal device.

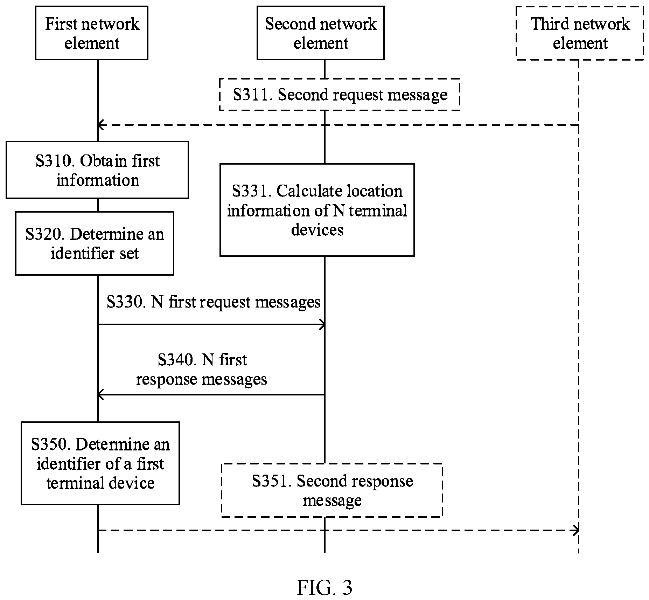

The following describes in detail a method for obtaining an identifier of a terminal device in the embodiments of this application with reference to FIG. 3 to FIG. 5, so that an identifier of a terminal device can be obtained based on input location information of the terminal device.

FIG. 3 is a schematic diagram of a method for obtaining an identifier of a terminal device according to this application. A first network element and a second network element are included, a third network element may be included, and steps S310 to S350 are included.

Specifically, the first network element is a mobility management entity network element in a core network.

In a 5G communications system, the mobility management entity network element may be an MME network element. In a future communications system, the mobility management entity network element may still be the MME network element, or may have another name. This is not limited in this application.

Specifically, the second network element is a network element that performs a positioning algorithm in the core network.

In the 5G communications system, the network element that performs the positioning algorithm may be an E-SMLC network element. In the future communications system, the network element that performs the positioning algorithm may still be the E-SMLC network element, or may have another name. This is not limited in this application.

Specifically, the third network element is a network element responsible for a positioning function in the core network.

In the 5G communications system, the network element responsible for the positioning function may be a GMLC network element. In the future communications system, the network element responsible for the positioning function may still be the GMLC network element, or may have another name. This is not limited in this application.

S310. The first network element obtains first information.

Specifically, the first information carries location information of a first terminal device. The location information of the first terminal device may be location information of a user holding the first terminal device, and is used to indicate a location of the terminal device.

Specifically, in this embodiment of this application, the obtaining, by the first network element, first information may be obtaining first information for a plurality of times. The first information obtained for the plurality of times includes location information of the first terminal device at different moments.

For example, the first network element obtains first information (referred to as first first-information) at a first moment, and the first information includes location information of the first terminal device at the first moment; the first network element obtains first information (referred to as second first-information) at a second moment, and the first information includes location information of the first terminal device at the second moment.

The first moment is different from the second moment, and the location information of the first terminal device at the first moment may be different from the location information of the first terminal device at the second moment.

Optionally, in some embodiments, the obtaining, by the first network element, first information includes:

The first network element receives a second request message sent by the third network element. The second request message is used to request the first network element to obtain an identifier of the first terminal device. The first request message includes the first information.

Specifically, when the first information is sent by the third network element, the first network element obtains, at the first moment, the location information of the first terminal device at the first moment that is included in the first information. It can be understood that, due to an information transmission delay, there is a time difference between the first moment at which the first network element obtains the first information and the first moment mentioned in the location information of the first terminal device at the first moment. However, this is not considered in this application. The time difference may be ignored, and both the moments are referred to as the first moment.

It should be understood that, in this application, when the first network element obtains first information from the third network element for a plurality of times, an emphasis is that location information of the first terminal device that is included in first information obtained each time is different, and a specific obtaining time is not concerned.

In this case, FIG. 3 further includes S311: The third network element sends the second request message to the first network element. It can be understood that the third network element receives a third request message from a server, the third request message is used to request the GMLC to obtain the identifier of the first terminal device, and the third request message includes the first information.

Optionally, in some other embodiments, the obtaining, by the first network element, first information includes:

The first network element receives the first information sent by the first terminal device.

Optionally, in some other embodiments, the obtaining, by the first network element, first information includes:

The first network element stores the first information. The first network element may obtain the first information from a storage unit periodically, according to a requirement of the first terminal device, or based on triggering by another network element.

S320. The first network element determines an identifier set.

Specifically, the first network element determines the identifier set based on the first information. The identifier set includes identifiers of N terminal devices. The N terminal devices include at least the first terminal device. N is a positive integer.

Optionally, in some embodiments, the first information further carries status information of the first terminal device.

Specifically, the status information of the first terminal device is used to indicate a status of the first terminal device.

For example, the status information of the first terminal device indicates that the first terminal device is in a powered-on state.

Specifically, a system specifies that the status information of the first terminal device that is carried in the first information is one bit; and when a bit value of the bit is 1, it indicates that the first terminal device is in the powered-on state; or when the bit value is 0, it indicates that the first terminal device is in a powered-off state.

For another example, the status information of the first terminal device indicates a data transmission rate of the first terminal device.

Specifically, a system specifies that the status information of the first terminal device that is carried in the first information is one bit; and when a bit value of the bit is 1, it indicates that the data transmission rate of the first terminal device is greater than a preset threshold; or when the bit value is 0, it indicates that the data transmission rate of the first terminal device is less than the preset threshold.

For another example, the status information of the first terminal device indicates that an application program is started on the first terminal device.

For another example, the status information of the first terminal device indicates a traffic usage status of the first terminal device.

For another example, the status information of the first terminal device indicates a call status of the first terminal device, a standby status of the first terminal device, or the like.

For another example, the status information of the first terminal device indicates that the first terminal device is in a powered-on and traffic-on state.

It should be understood that, in this embodiment of this application, a specific status of the first terminal device that is indicated by the status information of the first terminal device is not limited, and all status information that can indicate the status of the first terminal device falls within the protection scope of this application.

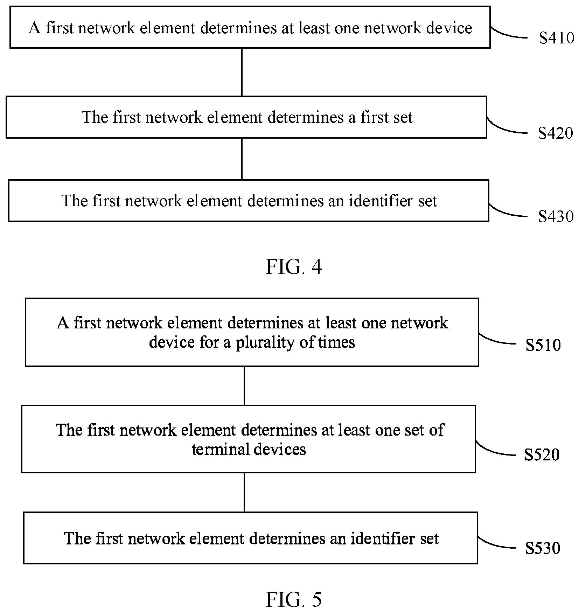

The following describes in detail how the first network element determines the identifier set with reference to FIG. 4 and FIG. 5.

FIG. 4 is a flowchart of determining the identifier set by the first network element. Steps S410 to S430 are included.

S410. The first network element determines at least one network device.

Specifically, after obtaining the first information, the first network element determines, based on the location information of the first terminal device, the at least one network device in at least one second location that meets a preset condition with a first location indicated by the location information of the first terminal device.

Specifically, the at least one second location that meets the preset condition with the first location indicated by the location information of the first terminal device may be a location near the first location.

For example, the preset condition is all locations with a distance in a range of 2 meters from the first location. In this case, second locations are all locations in a circle with a radius of 2 meters and with the first location as a center of the circle (a center of a sphere when coordinates of the first location are three-dimensional).

Further, the first network element determines, based on the at least one second location, the at least one network device in the at least one second location.

S420. The first network element determines a first set.

Specifically, the first network element determines, based on the at least one network device, the first set of terminal devices camping on the at least one network device.

It should be understood that, after determining the at least one network device based on the location information of the first terminal device, the first network element can obtain the first set of terminal devices camping on the at least one network device. The first set of terminal devices includes at least the first terminal device.

S430. The first network element determines an identifier set.

Optionally, when the first information includes only the location information of the first terminal device, the first network element obtains an identifier of a terminal device in the first set determined in S420, to form the identifier set. This may be understood as that the first network element determines N terminal devices that camp on the at least one network device, and obtains identifiers of the N terminal devices to form the identifier set.

Optionally, when the first information further includes the status information of the first terminal device, the first network element determines, in the terminal devices included in the first set determined in S420, a terminal device whose status is consistent with the status indicated by the status information of the first terminal device, and obtains an identifier of the terminal device that is in the first set and whose status is consistent, to form the identifier set. In this case, a quantity of terminal devices in the first set is greater than or equal to a quantity of terminals corresponding to all identifiers in the identifier set.

This may be understood as that the first network element determines M terminal devices that camp on the at least one network device, determines, in the M terminal devices, N terminal devices whose statuses are consistent with the status indicated by the status information of the first terminal device, and obtains identifiers of the N terminal devices to form the identifier set. M is a positive integer larger than or equal to N.

FIG. 5 is another flowchart of determining the identifier set by the first network element. Steps S510 to S530 are included.

S510. The first network element determines at least one network device for a plurality of times.

Specifically, after obtaining first information (first first-information) for the first time, the first network element determines, based on location information of the first terminal device at a first moment that is included in the first first-information, at least one network device in at least one second location that meets a preset condition with a first location indicated by the location information of the first terminal device at the first moment.

Specifically, the at least one second location that meets the preset condition with the first location indicated by the location information of the first terminal device at the first moment may be a location near the first location.

For example, the preset condition is all locations with a distance in a range of 2 meters from the first location. In this case, second locations are all locations in a circle with a radius of 2 meters and with the first location as a center of the circle (a center of a sphere when coordinates of the first location are three-dimensional).

Further, the first network element determines, based on the at least one second location, the at least one network device (a first network device) in the at least one second location.

Specifically, after obtaining first information (second first-information) for the second time, the first network element determines, based on location information of the first terminal device at a second moment that is included in the second first-information, at least one network device in at least one fourth location that meets a preset condition with a third location indicated by the location information of the first terminal device at the second moment.

Specifically, the at least one fourth location that meets the preset condition with the third location indicated by the location information of the first terminal device at the second moment may be a location near the third location.

For example, the preset condition is all locations with a distance in a range of 2 meters from the third location. In this case, fourth locations are all locations in a circle with a radius of 2 meters and with the third location as a center of the circle (a center of a sphere when coordinates of the third location are three-dimensional).

Further, the first network element determines, based on the at least one fourth location, the at least one network device (a second network device) in the at least one fourth location.

S520. The first network element determines at least one set of terminal devices.

Specifically, the first network element determines, based on the first network device, a set (a second set) of terminal devices camping on the first network device.

It should be understood that, after determining the first network device based on the location information of the first terminal device at the first moment, the first network element can obtain a first set of terminal devices camping on the first network device. The first set of terminal devices includes at least the first terminal device.

Specifically, the first network element determines, based on the second network device, a set (a third set) of terminal devices camping on the second network device.

It should be understood that, after determining the second network device based on the location information of the first terminal device at the second moment, the first network element can obtain a first set of terminal devices camping on the second network device. The first set of terminal devices includes at least the first terminal device.

S530. The first network element determines an identifier set.

Case 1: The first first-information includes only the location information of the first terminal device at the first moment, and the second first-information includes only the location information of the first terminal device at the second moment.

The first network element obtains an identifier of a terminal device in the second set determined in S520, to form a first identifier set.

This may be understood as that the first network element determines X terminal devices that camp on the first network device, and obtains identifiers of the X terminal devices, where X is a positive integer greater than or equal to N, to form the first identifier set.

The first network element obtains an identifier of a terminal device in the third set determined in S520, to form a second identifier set.

This may be understood as that the first network element determines Y terminal devices that camp on the second network device, and obtains identifiers of the Y terminal devices, where Y is a positive integer greater than or equal to N, to form the second identifier set.

The first network element determines an intersection set of the first identifier set and the second identifier set as the identifier set.

Case 2: The first first-information includes the location information of the first terminal device at the first moment and status information of the first terminal device at the first moment, and the second first-information includes the location information of the first terminal device at the second moment and status information of the first terminal device at the second moment.

The first network element determines, in the terminal devices included in the second set determined in S520, a terminal device whose status is consistent with a status indicated by the status information of the first terminal device at the first moment, and obtains an identifier of the terminal device that is in the second set and whose status is consistent, to form a third identifier set.

In this case, a quantity of terminal devices in the second set is greater than or equal to a quantity of terminals corresponding to all identifiers in the third identifier set.

This may be understood as that the first network element determines X1 terminal devices that camp on the first network device, determines, in the X1 terminal devices, X terminal devices whose statuses are consistent with the status indicated by the status information of the first terminal device at the first moment, and obtains identifiers of the X terminal devices to form the third identifier set. X1 is a positive integer greater than or equal to X.

The first network element determines, in the terminal devices included in the third set determined in S520, a terminal device whose status is consistent with a status indicated by the status information of the first terminal device at the second moment, and obtains an identifier of the terminal device that is in the third set and whose status is consistent, to form a fourth identifier set.

In this case, a quantity of terminal devices in the third set is greater than or equal to a quantity of terminals corresponding to all identifiers in the fourth identifier set.

This may be understood as that the first network element determines Y1 terminal devices that camp on the first network device, determines, in the Y1 terminal devices, Y terminal devices whose statuses are consistent with the status indicated by the status information of the first terminal device at the first moment, and obtains identifiers of the Y terminal devices to form the third identifier set. Y1 is a positive integer greater than or equal to Y

The first network element determines an intersection set of the third identifier set and the fourth identifier set as the identifier set.

Case 3: The first first-information includes the location information of the first terminal device at the first moment and status information of the first terminal device at the first moment, and the second first-information includes only the location information of the first terminal device at the second moment.

The first network element determines, in the terminal devices included in the second set determined in S520, a terminal device whose status is consistent with a status indicated by the status information of the first terminal device at the first moment, and obtains an identifier of the terminal device that is in the second set and whose status is consistent, to form a third identifier set.

In this case, a quantity of terminal devices in the second set is greater than or equal to a quantity of terminals corresponding to all identifiers in the third identifier set.

This may be understood as that the first network element determines X1 terminal devices that camp on the first network device, determines, in the X1 terminal devices, X terminal devices whose statuses are consistent with the status indicated by the status information of the first terminal device at the first moment, and obtains identifiers of the X terminal devices to form the third identifier set. X1 is a positive integer greater than or equal to X.

The first network element determines an intersection set of the third identifier set and the second identifier set as the identifier set.

Case 4: The first first-information includes only the location information of the first terminal device at the first moment, and the second first-information includes the location information of the first terminal device at the second moment and status information of the first terminal device at the second moment. This case is similar to the case 3. The first network element determines an intersection set of the fourth identifier set and the second identifier set as the identifier set.

It should be understood that, in FIG. 5, obtaining the first first-information and the second first-information by the first network element is merely used an example to describe how the first network element determines the identifier set when the first network element obtains first information for a plurality of times and the first information includes different information. This cannot limit the protection scope of this application. In this application, the first network element may obtain first information more than twice. It should be understood that, because the first network element has a communication relationship with the at least one network device, the first network element includes identifiers of all terminal devices that camp on the at least one network device.

This may be understood as that a terminal device registers related information with the first network element when camping on the at least one network device; or
the first network element obtains, from the at least one network device, the identifiers of all the terminal devices that camp on the at least one network device.

S330. The first network element sends N first request messages to the second network element.

Specifically, the N first request messages carry the identifiers of the N terminal devices, and are used to request the second network element to determine location information of the N terminal devices.

For example, the identifier set includes three identifiers: A, B, and C. The three identifiers are identifiers of a second terminal device, a third terminal device, and a fourth terminal device.

The first network element sends a first first-request-message to the second network element. The first first-request-message carries the identifier A, and is used to request the second network element to determine location information of the second terminal device.

The first network element sends a second first-request-message to the second network element. The second first-request-message carries the identifier B, and is used to request the second network element to determine location information of the third terminal device.

The first network element sends a third first-request-message to the second network element. The second first-request-message carries the identifier C, and is used to request the second network element to determine location information of the fourth terminal device.

S331. The second network element calculates the location information of the N terminal devices.

The second network element separately obtains, through calculation, the location information of the N terminal devices based on the N first request messages by using a preset positioning algorithm.

For the preset positioning algorithm, any prior-art positioning method for determining location information of a terminal device based on an identifier of the terminal device may be used.

For example, the second network element separately determines the location information of the second terminal device, the third terminal device, and the fourth terminal device based on the identifiers of the second terminal device, the third terminal device, and the fourth terminal device. Any one of prior-art positioning methods for determining location information of a terminal device based on an identifier of the terminal device may be used. This is not limited in this application.

S340. The first network element receives N first response messages sent by the second network element.

The N first response messages carry the location information of the N terminal devices.

For example, the second network element determines, based on the identifier of the second terminal device, that the location information of the second terminal device is (Aₓ, A_{y}), and the second network element sends a first first-response-message to the first network element. The first first-response-message carries the location information of the second terminal device.

The second network element determines, based on the identifier of the third terminal device, that the location information of the third terminal device is (Bₓ, B_{y}), and the second network element sends a second first-response-message to the first network element. The second first-response-message carries the location information of the third terminal device.

The second network element determines, based on the identifier of the fourth terminal device, that the location information of the fourth terminal device is (Cₓ, C_{y}), and the second network element sends a third first-response-message to the first network element. The third first-response-message carries the location information of the fourth terminal device.

S350. The first network element determines the identifier of the first terminal device.

Specifically, the first network element compares the location information of the first terminal device with the location information of the N terminal devices, and determines the identifier of the first terminal device in the identifier set.

It should be understood that the first network element includes the identifier set and the location information of the first terminal device. When receiving location information of terminal devices corresponding to N identifiers in the identifier set, the first network element determines, based on the received location information of the N terminal devices, which third location in at least one third location indicated by the location information of the N terminal devices is closest to the first location indicated by the location information of the first terminal device, and uses an identifier of a terminal device corresponding to the third location information as the identifier of the first terminal device.

For example, the identifier set determined by the first network element includes the three identifiers: A, B, and C, which are the identifiers of the second terminal device, the third terminal device, and the fourth terminal device. The location information of the first terminal device is (x, y).

The first network element receives the first first-response-message sent by the second network element. The first first-response-message carries the location information of the second terminal device: (Aₓ, A_{y}).

The first network element receives the second first-response-message sent by the second network element. The second first-response-message carries the location information of the third terminal device: (Bₓ, B_{y}).

The first network element receives the third first-response-message sent by the second network element. The third first-response-message carries the location information of the fourth terminal device: (Cₓ, C_{y}).

The first network element determines, through comparison, which one of the three locations (Aₓ, A_{y}), (Bₓ, B_{y}), and (Cₓ, C_{y}) is closest to (x, y).

Specifically, assuming that (x, y) = (10, 10), (Aₓ, A_{y}) = (9, 9), (Bₓ, B_{y}) = (8, 8), and (Cₓ, C_{y}) = (7, 7), (x, y) is closest to (Aₓ, A_{y}).

Further, the first network element determines A as the identifier of the first terminal device.

Optionally, in some embodiments, location information of each terminal device in the location information of the N terminal devices includes positioning precision information.

For example, the first network element receives the first first-response-message sent by the second network element, and the first first-response-message carries the location information of the second terminal device: (Aₓ±1, A_{y}±1). It should be understood that "±1" is positioning precision.

The first network element receives the second first-response-message sent by the second network element, and the second first-response-message carries the location information of the third terminal device: (Bₓ±1, B_{y}±1). It should be understood that "±1" is positioning precision.

The first network element receives the third first-response-message sent by the second network element, and the third first-response-message carries the location information of the fourth terminal device: (Cₓ±1, C_{y}±1). It should be understood that "±1" is positioning precision.

The first network element determines, through comparison, which one of the three locations (Aₓ±1, A_{y}±1), (Bₓ±1, B_{y}±1), and (Cₓ±1, C_{y}±1) is closest to (x, y).

Specifically, assuming that (x, y) = (10, 10), (Aₓ±1, A_{y}±1) = (8-10, 8-10), (Bₓ±1, B_{y}±1) = (7-9, 7-9), and (Cₓ±1, C_{y}±1) = (6-8, 6-8), (x, y) is closest to (Aₓ±1, A_{y}±1).

Further, the first network element determines A as the identifier of the first terminal device.

Optionally, when FIG. 3 includes S311, FIG. 3 further includes S351: The first network element sends a second response message to the third network element.

Specifically, the second response message carries the identifier of the first terminal device.

When receiving the third request message from the server, the third network element sends a third response message to the server. The third response message carries the identifier of the first terminal device.

Optionally, the identifier of the first terminal device is an identifier used by the first terminal device for communication, and communication information of the first terminal device can be obtained based on the identifier of the first terminal device.

For example, the identifier of the first terminal device is a mobile phone number of the first terminal device, the identifier of the first terminal device is an identifier of a subscriber identity module (subscriber identity module, SIM) card of the first terminal device, or the identifier of the first terminal device may be other identification information that can be used to determine the first terminal device.

It should be understood that the steps shown in FIG. 3 may be repeatedly performed to obtain the identifier of the first terminal device more accurately. To be specific, the first network element re-determines the identifier set and the identifier of the first terminal device based on location information of the first terminal device that is updated in real time.

To further understand the method for obtaining an identifier of a terminal device in FIG. 3, the method for obtaining an identifier of a terminal device in this application may be used in the determining a suspect's mobile phone number.

The following describes, with reference to a specific embodiment, the method for obtaining an identifier of a terminal device in this embodiment of this application.

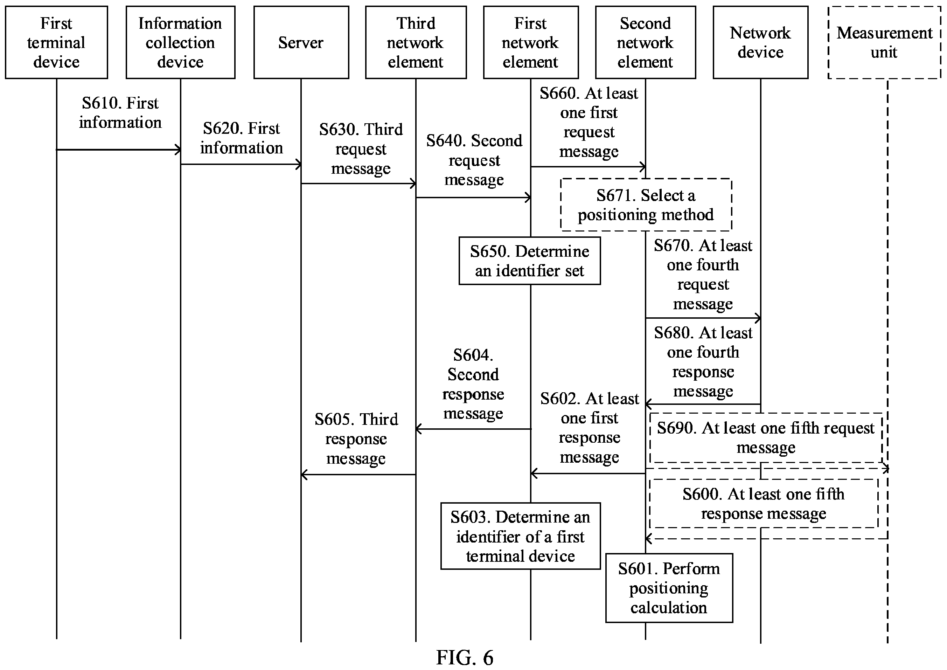

FIG. 6 is a schematic diagram of a specific embodiment of a method for obtaining an identifier of a terminal device according to an embodiment of this application. A first terminal device, an information collection device, a server, a first network element, a second network element, a third network element, a network device, and a measurement unit are included.

The parts shown in FIG. 6 can form a system for determining a suspect's mobile phone number, and the system includes a core network part and a part outside the core network. The core network part includes the first network element, the second network element, the third network element, the network device, and the measurement unit shown in FIG. 6. The part outside the core network includes the first terminal device, the information collection device, and the server shown in FIG. 6.

Specifically, the first terminal device may be any one of the foregoing terminal devices.

S610. The information collection device collects first information, where the first information includes location information of the first terminal device.

Optionally, the first information may further include status information of the first terminal device.

Specifically, the information collection device may be a camera, an event data recorder, a device for inputting information to a human eye, or the like. It should be understood that, in this embodiment of this application, a specific form of the information collection device is not limited, and the information collection device may be any device that can collect the first information.

It should be understood that the location information of the terminal device may be coordinates of a user holding the first terminal device.

Specifically, in this embodiment, the first terminal device may be a mobile phone, the user holding the first terminal device is a suspect, and the status information of the first terminal device may be information indicating whether the mobile phone is in a call state.

In this embodiment, descriptions are provided by using an example in which the first terminal device is the mobile phone, the location information of the first terminal device that is carried in the first information is (x, y), and the status information of the first terminal device that is carried in the first information may be information indicating that the mobile phone is in the call state.

S620. The server obtains the first information from the information collection device.

The server authorized to obtain the first information may obtain the first information from the information collection device when the first information needs to be known.

It should be understood that the obtaining, by the server, the first information from the information collection device may be as follows: The server accesses the information collection device to obtain the first information; or
a trusted connection exists between the server and the information collection device, and when the first information is collected, the information collection device sends the first information to the server.

Optionally, when the first information includes a plurality of types of information (for example, the location information of the first terminal device and the status information of the first terminal device), the server may first obtain the location information of the first terminal device and then obtain the status information of the first terminal device, and combine the information to obtain the first information.

Specifically, when the method for identifying the identifier of the first terminal device in this embodiment of this application is used to determine a suspect's mobile phone number, the server may be a dedicated network server for public security.

This may be understood as that the dedicated network server for public security obtains, from the camera, the location information (x, y) of the mobile phone and information indicating that the mobile phone is in a call.

S630. The server sends a third request message to the third network element.

Specifically, the third request message is used to request the third network element to obtain the identifier of the first terminal device, the third request message carries the first information, and the third network element is the third network element in FIG. 3.

S640. The third network element sends a second request message to the first network element.

Specifically, the second request message is used to request the first network element to obtain the identifier of the first terminal device, the second request message carries the first information, and the first network element is the first network element in FIG. 3.

It should be understood that the third request message and the second request message may be a same message, or may be information in a same message body.

Specifically, both the second request message and the third request message carry the first information, the third request message is sent by the server outside the core network to the third network element in the core network, and the second request message is sent by the third network element in the core network to the first network element in the core network.

Therefore, message protocols of the third request message and the second request message may be different.

S650. The first network element determines an identifier set.

The identifier set includes at least the identifier of the first terminal device. It should be understood that the identifier set may further include identifiers of a plurality of second terminal devices. The second terminal devices are different from the first terminal device.

For example, the first network element determines two nearby network devices based on the location information (x, y) of the mobile phone, 20 mobile phones camp on the two network devices, and five mobile phones are in a call state. In this case, the identifier set includes identifiers of the five mobile phones.

S660. The first network element sends at least one first request message to the second network element.

Specifically, the first network element sends a first request message to the third network element for each identifier in the identifier set. To be specific, the first network element sends at least one first request message to the second network element, and the at least one first request message is in a one-to-one correspondence with at least one identifier in the identifier set.

For example, the identifier set in S650 includes identifiers of five terminal devices. The first network element sends five first request messages to the second network element for the identifiers of the five terminal devices, and each first request message carries an identifier of one terminal device in the identifiers of the five terminal devices.

S670. The second network element sends at least one fourth request message to the network device.

Specifically, the second network element obtains at least one identifier for the received at least one first request message, and sends a fourth request message to the network device based on each identifier. To be specific, the second network element sends at least one fourth request message to the network device, and the at least one fourth request message is in a one-to-one correspondence with at least one identifier in the identifier set.

The second network element sends a first fourth-request-message to the network device for a first identifier in the at least one identifier, the first fourth-request-message includes the first identifier, and the first fourth-request-message is used to obtain calculation information required for determining a location of a terminal device corresponding to the first identifier.

Specifically, the first identifier is any identifier in the identifier set, and the first fourth-request-message is a fourth request message that carries the first identifier in the at least one fourth request message.

It should be understood that, in this embodiment of this application, information exchange between the second network element and the network device may be obtaining, by using the LMU in the method shown in FIG. 2, the calculation information required for determining the location of the terminal device corresponding to the first identifier.

In this case, the schematic diagram of the method for obtaining an identifier of a terminal device in FIG. 6 further includes the measurement unit and S690: The second network element sends at least one fifth request message to the measurement unit.

Specifically, after receiving a fourth response message sent by the network device, the second network element obtains, from the fourth response message, configuration information required for measuring a location of a terminal device.

The second network element sends the configuration information to the measurement unit by using the fifth request message. The measurement unit performs measurement based on the configuration information, and sends a measurement result to the second network element by using a fifth response message. In this case, FIG. 6 further includes S600: The measurement unit sends at least one fifth response message to the second network element.

It should be understood that the second network element sends, to the measurement unit for each identifier in the identifier set, obtained configuration information required for measuring a location of a terminal device corresponding to each identifier, and the measurement unit also feeds back a measurement result for each identifier. Therefore, there is at least one fifth request message and at least one fifth response message.

Alternatively, in this embodiment of this application, information exchange between the second network element and the network device may be information exchange between a second network element and a network device in a procedure of another positioning method in a cellular network in the prior art.

Examples are a cell ID positioning technology in which no LMU is required and an assisted global positioning system (Assisted Global Positioning System, AGPS) positioning technology. Examples are not listed one by one herein.

This may be understood as that the information exchange between the second network element and the network device in S670 may be information exchange between a second network element and a network device in any one of prior-art positioning methods for obtaining location information of a terminal device based on an identifier of the terminal device.

Optionally, FIG. 6 may further include S671: The second network element selects a positioning method.

The network device is a device that provides calculation information required for a positioning algorithm.

For example, the network device is a base station or the foregoing another network device entity.

S680. The network device sends at least one fourth response message to the second network element.

After obtaining an identifier of each terminal device, the network device determines calculation information required for calculating location information of the terminal device, adds the calculation information to a fourth response message, and sends the fourth response message to the second network element.

For example, the network device sends five fourth response messages to the second network element.

S601. The second network element performs positioning calculation.

The second network element receives, for each identifier in the identifier set, calculation information required for calculating location information of a terminal device corresponding to the identifier. In this case, the second network element performs positioning calculation based on the calculation information, to obtain the location information and positioning precision of the terminal device.

In this embodiment of this application, determining of positioning precision is not limited, and the positioning precision may be a value determined based on an empirical value, or may be a precision value specified by a system.

It should be understood that the second network element performs positioning calculation for each received identifier in the identifier set.

For example, the second network element receives the foregoing five first request messages, or performs positioning calculation for an identifier of a terminal device that is carried in each of the five first request messages, to obtain location information of the five terminal devices.

S602. The second network element sends at least one first response message to the first network element.

Specifically, the second network element sends the location information and the positioning precision of the terminal device corresponding to each identifier in the identifier set to the first network element.

For example, the second network element sends five first response messages to the first network element, and each of the five first response messages carries location information of one terminal device.

S603. The first network element determines the identifier of the first terminal device.

For example, the first network element compares (x, y) with the location information of the foregoing five terminal devices, determines location information of a terminal device closest to (x, y) in the location information of the five terminal devices, and determines an identifier of a terminal device corresponding to the location information of the terminal device as the identifier of the first terminal device.

S604. The first network element sends a second response message to the third network element.

Specifically, the first network element adds identification information of the first terminal device to the second response message, and sends the second response message to the third network element.

S605. The third network element sends a third response message to the server.

Specifically, the third network element adds the identification information of the first terminal device to the third response message, and sends the third response message to the server.

It should be understood that, to accurately determine the identifier of the first terminal device, the server obtains the first information in real time, and the steps shown in FIG. 6 are repeated, so that the identifier of the first terminal device can be accurately determined. To be specific, the identifier of the first terminal device is determined for a plurality of times, so that the obtained identifier of the first terminal device is more accurate.

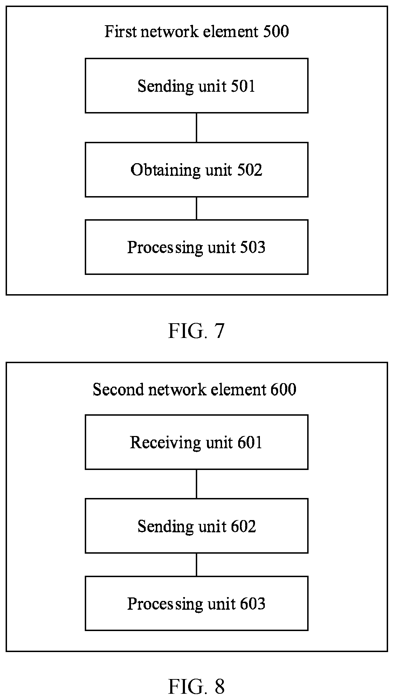

The foregoing describes in detail the method for obtaining an identifier of a terminal device in the embodiments of this application with reference to FIG. 3 to FIG. 6. The following describes in detail network elements provided in the embodiments of this application with reference to FIG. 7 to FIG. 12.

FIG. 7 is a schematic block diagram of a first network element 500 according to an embodiment of this application. The first network element includes a sending unit 501, an obtaining unit 502, and a processing unit 503.

The obtaining unit 502 is configured to obtain first information. The first information carries location information of a first terminal device.

The processing unit 503 is configured to determine an identifier set based on the first information. The identifier set includes identifiers of N terminal devices. The N terminal devices include at least the first terminal device. N is a positive integer.

The sending unit 501 is configured to send N first request messages to a second network element. The N first request messages carry the identifiers of the N terminal devices, and are used to request the second network element to determine location information of the N terminal devices.

The obtaining unit 502 is further configured to receive N first response messages sent by the second network element. The N first response messages carry the location information of the N terminal devices.

The processing unit 503 is further configured to compare the location information of the first terminal device with the location information of the N terminal devices, and determine an identifier of the first terminal device in the identifier set.

The identifier of the first terminal device is an identifier used by the first terminal device for communication, and communication information of the first terminal device can be obtained based on the identifier of the first terminal device.

Optionally, the first information further carries status information of the first terminal device, and the status information of the first terminal device is used to indicate a status of the first terminal device.

Specifically, the determining, by the processing unit 503, an identifier set based on the first information includes:

The processing unit 503 determines, based on the location information of the first terminal device, at least one network device in at least one second location that meets a preset condition with a first location indicated by the location information of the first terminal device.

The processing unit 503 determines M terminal devices that camp on the at least one network device, determines, in the M terminal devices, N terminal devices whose statuses are consistent with the status indicated by the status information of the first terminal device, and obtains the identifiers of the N terminal devices to form the identifier set. M is a positive integer larger than or equal to N.

Optionally, the obtaining, by the obtaining unit 502, first information includes:

The obtaining unit 502 receives a second request message sent by a third network element. The second request message is used to request the first network element to obtain the identifier of the first terminal device. The second request message includes the first information.

Optionally, location information of each terminal device in the location information of the N terminal devices includes positioning precision information.

Specifically, the determining, by the processing unit 503, an identifier set based on the first information includes:

The processing unit 503 determines a first identifier set based on first first-information. The first identifier set includes identifiers of X terminal devices. The X terminal devices include at least the first terminal device. X is a positive integer greater than or equal to N.

The first first-information is first information obtained by the obtaining unit 502 at a first moment. The first first-information carries location information of the first terminal device at the first moment.

The processing unit 503 determines a second identifier set based on second first-information. The second identifier set includes identifiers of Y terminal devices. The Y terminal devices include at least the first terminal device. Y is a positive integer greater than or equal to N.

The second first-information is first information obtained by the obtaining unit 502 at a second moment. The second first-information carries location information of the first terminal device at the second moment.

The processing unit 503 determines an intersection set of the first identifier set and the second identifier set as the identifier set. FIG. 8 is a schematic block diagram of a second network element 600 according to an example not being part of the present application but helpful for understanding of this application. The second network element includes a receiving unit 601, a sending unit 602, and a processing unit 603.

The receiving unit 601 is configured to receive N first request messages sent by a first network element. The N first request messages carry identifiers of N terminal devices, and are used to request the second network element to determine location information of the N terminal devices.

The processing unit 603 is configured to: separately obtain, through calculation, the location information of the N terminal devices based on the N first request messages by using a preset positioning algorithm.

The sending unit 602 is configured to send N first response messages to the first network element, and the N first response messages carry the location information of the N terminal devices, where
the identifiers of the terminal devices are identifiers used by the terminal devices for communication, and communication information of the terminal devices can be obtained based on the identifiers of the terminal devices.

Optionally, location information of each terminal device in the location information of the N terminal devices includes positioning precision information.

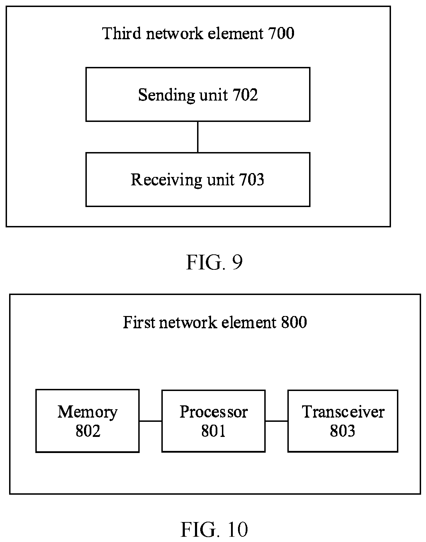

FIG. 9 is a schematic block diagram of a third network element 700 according to an example not being part of the present application but helpful for understanding of this application. The third network element includes a sending unit 702 and a receiving unit 703.

The sending unit 702 is configured to send a second request message to a first network element. The second request message is used to request the first network element to obtain an identifier of a first terminal device. The second request message includes first information, and the first information carries location information of the first terminal device.

The receiving unit 703 is configured to receive a second response message sent by the first network element. The second response message carries the identifier of the first terminal device, and the identifier of the first terminal device is an identifier used by the first terminal device for communication. Communication information of the first terminal device can be obtained based on the identifier of the first terminal device.

Optionally, the first information further carries status information of the first terminal device, and the status information of the first terminal device is used to indicate a status of the first terminal device.

Before the third network element sends the second request message to the first network element, the receiving unit 703 is further configured to receive a third request message from a server, where the third request message is used to request the third network element to obtain the identifier of the first terminal device, and the third request message includes the first information.

The sending unit 702 is further configured to send a third response message to the server, where the third response message carries the identifier of the first terminal device.

As shown in FIG. 10, an embodiment of this application further provides a first network element 800. The first network element 800 includes a processor 801, a memory 802, and a transceiver 803. The memory 802 stores an instruction or a program, and the processor 801 is configured to execute the instruction or the program stored in the memory 802. When the instruction or program stored in the memory 802 is executed, the processor 801 is configured to perform the operations performed by the processing unit 503 in the embodiment shown in FIG. 7, and the transceiver 803 is configured to perform the operations performed by the obtaining unit 502 and the sending unit 501 in the embodiment shown in FIG. 7.

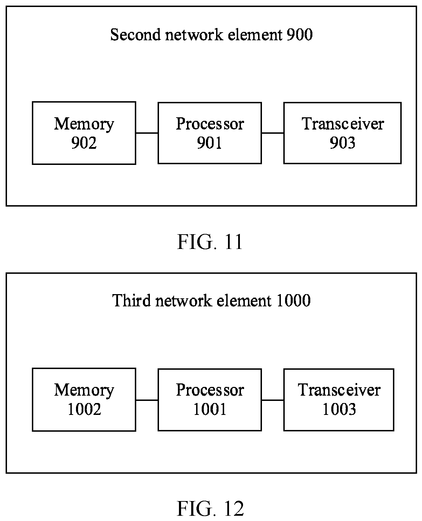

As shown in FIG. 11, an example not being part of the present application but helpful for understanding this application further provides a second network element 900. The second network element 900 includes a processor 901, a memory 902, and a transceiver 903. The memory 902 stores an instruction or a program, and the processor 901 is configured to execute the instruction or the program stored in the memory 902. When the instruction or program stored in the memory 902 is executed, the processor 901 is configured to perform the operations performed by the processing unit 603 in the embodiment shown in FIG. 8, and the transceiver 903 is configured to perform the operations performed by the receiving unit 601 and the sending unit 602 in the embodiment shown in FIG. 7.

As shown in FIG. 12, an example not being part of the present application but helpful for understanding this application further provides a third network element 1000. The third network element 1000 includes a processor 1001, a memory 1002, and a transceiver 1003. The memory 1002 stores an instruction or a program, and the processor 1001 is configured to execute the instruction or the program stored in the memory 1002. When the instruction or program stored in the memory 1002 is executed, the transceiver 1003 is configured to perform the operations performed by the receiving unit 703 and the sending unit 702 in the embodiment shown in FIG. 9.

It should be understood that, the processor mentioned in the embodiments of the present invention may be a central processing unit (central processing unit, CPU), the processor may further be another general purpose processor, a digital signal processor (digital signal processor, DSP), an application specific integrated circuit (application specific integrated circuit, ASIC), a field programmable gate array (field programmable gate array, FPGA), or another programmable logical device, discrete gate or transistor logical device, discrete hardware component, or the like. The general purpose processor may be a microprocessor, or the processor may be any conventional processor or the like.

It may be understood that the memory mentioned in the embodiments of the present invention may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification includes but is not limited to these and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, network element, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

Although the invention has been explained in relation to its preferred embodiment(s) as mentioned above, it is to be understood that many other possible modifications and variations can be made without departing from the scope of the present invention, which is defined by the claims.

## Claims

1. A method for obtaining an identifier of a terminal device, comprising:
obtaining, by a first network element (500), first information, wherein the first information carries location information of a first terminal device;
determining, by the first network element (500), an identifier set based on the first information, wherein the identifier set comprises identifiers of N terminal devices, the N terminal devices comprise at least the first terminal device, and N is a positive integer;
sending, by the first network element (500), N first request messages to a second network element (600), wherein the N first request messages carry the identifiers of the N terminal devices, and are used to request the second network element (600) to determine location information of the N terminal devices;
receiving, by the first network element (500), N first response messages from the second network element (600), wherein the N first response messages carry the location information of the N terminal devices; and
determining, by the first network element (500), an identifier of the first terminal device (121) in the identifier set by determining which third location in at least one third location specified by the location information of the N terminal devices is closest to the first location specified by the location information of the first terminal device, and using an identifier of a terminal device corresponding to the third location information as the identifier of the first terminal device;
wherein the identifier of the first terminal device (121) is an identifier used by the first terminal device (121) for communication, and communication information of the first terminal device (121) can be obtained based on the identifier of the first terminal device;
wherein the first network element (500) is a mobility management entity network element in a core network;
wherein the second network element (600) is a network element that performs a positioning algorithm in the core network;
wherein location information of each terminal device in the location information of the N terminal devices comprises positioning precision information.

2. The method according to claim 1, wherein the first information further carries status information of the first terminal device, and the status information of the first terminal device (121) is used to indicate a status of the first terminal device; and
the determining, by the first network element (500), an identifier set based on the first information comprises:
determining, by the first network element (500) based on the location information of the first terminal device, at least one network device in at least one second location that meets a preset condition with a first location indicated by the location information of the first terminal device; and
determining, by the first network element (500), M terminal devices that camp on the at least one network device, determining, in the M terminal devices, N terminal devices whose statuses are consistent with the status indicated by the status information of the first terminal device, and obtaining the identifiers of the N terminal devices to form the identifier set, wherein M is a positive integer larger than or equal to N.

3. The method according to claim 1 or 2, wherein the obtaining, by a first network element (500), first information comprises:
receiving, by the first network element (500), a second request message from a third network element (700), wherein the second request message is used to request the identifier of the first terminal device, and the second request message comprises the first information.

4. The method according to any one of claims 1 to 3, wherein the determining, by the first network element (500), an identifier set based on the first information comprises:
determining, by the first network element (500), a first identifier set based on first first-information, wherein the first identifier set comprises identifiers of X terminal devices, the X terminal devices comprise at least the first terminal device, X is a positive integer greater than or equal to N, the first first-information is first information obtained by the first network element (500) at a first moment, and the first first-information carries location information of the first terminal device (121) at the first moment;
determining, by the first network element (500), a second identifier set based on second first-information, wherein the second identifier set comprises identifiers of Y terminal devices, the Y terminal devices comprise at least the first terminal device, Y is a positive integer greater than or equal to N, the second first-information is first information obtained by the first network element (500) at a second moment, and the second first-information carries location information of the first terminal device (121) at the second moment; and
determining, by the first network element (500), an intersection set of the first identifier set and the second identifier set as the identifier set.

5. A first network element (500), comprising:
an obtaining unit (502), configured to obtain first information, wherein the first information carries location information of a first terminal device;
a processing unit (503), configured to determine an identifier set based on the first information, wherein the identifier set comprises identifiers of N terminal devices, the N terminal devices comprise at least the first terminal device, and N is a positive integer; and
a sending unit (501), configured to send N first request messages to a second network element (600), wherein the N first request messages carry the identifiers of the N terminal devices, and are used to request the second network element (600) to determine location information of the N terminal devices;
the obtaining unit (502) is further configured to receive N first response messages from the second network element (600), wherein the N first response messages carry the location information of the N terminal devices; and
the processing unit (503) is further configured to determine an identifier of the first terminal device (121) in the identifier set by determining which third location in at least one third location specified by the location information of the N terminal devices is closest to the first location specified by the location information of the first terminal device, and using an identifier of a terminal device corresponding to the third location information as the identifier of the first terminal device;
wherein
the identifier of the first terminal device (121) is an identifier used by the first terminal device (121) for communication, and communication information of the first terminal device (121) can be obtained based on the identifier of the first terminal device;
wherein the first network element (500) is a mobility management entity network element in a core network;
wherein location information of each terminal device (121) in the location information of the N terminal devices comprises positioning precision information.

6. The first network element (500) according to claim 5, wherein the first information further carries status information of the first terminal device, and the status information of the first terminal device (121) is used to indicate a status of the first terminal device; and
the processing unit (503) is configured to determine, based on the location information of the first terminal device, at least one network device in at least one second location that meets a preset condition with a first location indicated by the location information of the first terminal device; and
the processing unit (503) is configured to determine M terminal devices that camp on the at least one network device, determines, in the M terminal devices, N terminal devices whose statuses are consistent with the status indicated by the status information of the first terminal device, and obtains the identifiers of the N terminal devices to form the identifier set, wherein M is a positive integer larger than or equal to N.

7. The first network element (500) according to claim 5 or 6, wherein:
the obtaining unit (502) is configured to receive a second request message from a third network element (700), wherein the second request message is used to request the identifier of the first terminal device, and the second request message comprises the first information.

8. The first network element (500) according to any one of claims 5 to 7, wherein:
the processing unit (503) is configured to determine a first identifier set based on first first-information, wherein the first identifier set comprises identifiers of X terminal devices, the X terminal devices comprise at least the first terminal device, X is a positive integer greater than or equal to N,
the first first-information is first information obtained by the obtaining unit (502) at a first moment, and the first first-information carries location information of the first terminal device (121) at the first moment;
the processing unit (503) is configured to determine a second identifier set based on second first-information, wherein the second identifier set comprises identifiers of Y terminal devices, the Y terminal devices comprise at least the first terminal device, Y is a positive integer greater than or equal to N,
the second first-information is first information obtained by the obtaining unit (502) at a second moment, and the second first-information carries location information of the first terminal device (121) at the second moment; and
the processing unit (503) is configured to determine an intersection set of the first identifier set and the second identifier set as the identifier set.

9. A system for obtaining an identifier of a terminal device, comprising at least one first network element (500) according to any one of claims 5 to 8 and at least one second network element (600);
the second network element comprising:
a receiving unit (601), configured to receive N first request messages from a first network element (500), wherein the N first request messages carry identifiers of N terminal devices, and are used to request the second network element (600) to determine location information of the N terminal devices;
a processing unit (603), configured to: separately obtain, through calculation, the location information of the N terminal devices based on the N first request messages by using a preset positioning algorithm; and
a sending unit (601), configured to send N first response messages to the first network element (500), wherein the N first response messages carry the location information of the N terminal devices, wherein
the identifiers of the terminal devices are identifiers used by the terminal devices for communication, and communication information of the terminal devices is obtained based on the identifiers of the terminal devices;
wherein the second network element (600) is a network element configured to perform a positioning algorithm in a core network;
wherein location information of each terminal device in the location information of the N terminal devices comprises positioning precision information.

10. A computer-readable storage medium, comprising a computer program, wherein when the computer program is run on a computer, the computer is enabled to perform the method for obtaining an identifier of a terminal device (121) according to any one of claims 1 to 4.

## Patentansprüche

1. Verfahren zum Erhalten eines Identifikators eines Endgerätes, Folgendes umfassend:
Erhalten von ersten Informationen durch ein erstes Netzelement (500), wobei die ersten Informationen Standortinformationen eines ersten Endgeräts tragen;
Bestimmen eines Identifikatorsatzes durch das erste Netzelement (500) auf der Grundlage der ersten Informationen, wobei der Identifikatorsatz Identifikatoren von N Endgeräten umfasst, die N Endgeräte mindestens das erste Endgerät umfassen und N eine positive ganze Zahl ist;
Senden von N ersten Anforderungsnachrichten durch das erste Netzelement (500) an ein zweites Netzelement (600), wobei die N ersten Anforderungsnachrichten die Identifikatoren der N Endgeräte tragen und verwendet werden, um das zweite Netzelement (600) anzufordern, Standortinformationen der N Endgeräte zu bestimmen;
Empfangen von N ersten Antwortnachrichten von dem zweiten Netzelement (600) durch das erste Netzelement (500), wobei die N ersten Antwortnachrichten die Standortinformationen der N Endgeräte tragen; und
Bestimmen eines Identifikators des ersten Endgeräts (121) in dem Identifikatorsatz durch das erste Netzelement (500) durch Bestimmen, welcher dritte Standort in mindestens einem dritten Standort, der durch die Standortinformationen der N Endgeräte spezifiziert ist, dem ersten Standort, der durch die Standortinformationen des ersten Endgeräts spezifiziert ist, am nächsten liegt, und Verwenden eines Identifikators eines Endgeräts, das den dritten Standortinformationen entspricht, als den Identifikator des ersten Endgeräts;
wobei der Identifikator des ersten Endgeräts (121) ein Identifikator ist, der von dem ersten Endgerät (121) zur Kommunikation verwendet wird, und Kommunikationsinformationen des ersten Endgeräts (121) auf der Grundlage des Identifikators des ersten Endgeräts erhalten werden können;
wobei das erste Netzelement (500) ein Netzelement einer Mobilitätsmanagementinstanz in einem Kernnetz ist;
wobei das zweite Netzelement (600) ein Netzelement ist, das einen Positionierungsalgorithmus in dem Kernnetz durchführt;
wobei Standortinformationen jedes Endgeräts in den Standortinformationen der N Endgeräte Positionspräzisionsinformationen umfassen.

2. Verfahren nach Anspruch 1, wobei die ersten Informationen ferner Statusinformationen des ersten Endgeräts tragen und die Statusinformationen des ersten Endgeräts (121) verwendet werden, um einen Status des ersten Endgeräts anzugeben; und
das Bestimmen eines Identifikatorsatzes auf der Grundlage der ersten Informationen durch das erste Netzelement (500) Folgendes umfasst:
Bestimmen, durch das erste Netzelement (500) auf der Grundlage der Standortinformationen des ersten Endgeräts, mindestens eines Netzgeräts an mindestens einem zweiten Standort, das eine voreingestellte Bedingung erfüllt, wobei ein erster Standort durch die Standortinformationen des ersten Endgeräts angegeben ist; und
Bestimmen, durch das erste Netzelement (500), von M Endgeräten, die auf dem mindestens einen Netzgerät campen, Bestimmen, in den M Endgeräten, von N Endgeräten, deren Status konsistent mit dem Status sind, der durch die Statusinformationen des ersten Endgeräts angegeben ist, und Erhalten der Identifikatoren der N Endgeräte, um den Identifikatorsatz zu bilden, wobei M eine positive ganze Zahl größer oder gleich N ist.

3. Verfahren nach Anspruch 1 oder 2, wobei das Beziehen von ersten Informationen durch ein erstes Netzelement (500) Folgendes umfasst:
Empfangen einer zweiten Anforderungsnachricht von einem dritten Netzelement (700) durch das erste Netzelement (500), wobei die zweite Anforderungsnachricht verwendet wird, um den Identifikator des ersten Endgeräts anzufordern, und die zweite Anforderungsnachricht die ersten Informationen umfasst.

4. Verfahren nach einem der Ansprüche 1 bis 3, wobei das Bestimmen eines Identifikatorsatzes auf der Grundlage der ersten Informationen durch das erste Netzelement (500) Folgendes umfasst:
Bestimmen eines ersten Identifikatorsatzes durch das erste Netzelement (500) auf der Grundlage erster Erstinformationen, wobei der erste Identifikatorsatz Identifikatoren von X Endgeräten umfasst, die X Endgeräte mindestens das erste Endgerät umfassen, X eine positive ganze Zahl größer oder gleich N ist, die ersten Erstinformationen erste Informationen sind, die durch das erste Netzelement (500) zu einem ersten Zeitpunkt erhalten werden, und die ersten Erstinformationen Standortinformationen des ersten Endgeräts (121) zu dem ersten Zeitpunkt tragen;
Bestimmen eines zweiten Identifikatorsatzes durch das erste Netzelement (500) auf der Grundlage zweiter Erstinformationen, wobei der zweite Identifikatorsatz Identifikatoren von Y Endgeräten umfasst, die Y Endgeräte mindestens das erste Endgerät umfassen, Y eine positive ganze Zahl größer oder gleich N, die zweiten Erstinformationen erste Informationen sind, die durch das erste Netzelement (500) zu einem zweiten Zeitpunkt erhalten werden, und die zweiten Erstinformationen Standortinformationen des ersten Endgeräts (121) zu dem zweiten Zeitpunkt tragen; und
Bestimmen einer Schnittmengensatzes des ersten Identifikatorsatzes und des zweiten Identifikatorsatzes als den Identifikatorsatz durch das erste Netzelement (500).

5. Erstes Netzelement (500), Folgendes umfassend:
eine Erhaltungseinheit (502), die dazu konfiguriert ist, erste Informationen zu erhalten, wobei die ersten Informationen Standortinformationen eines ersten Endgeräts tragen;
eine Verarbeitungseinheit (503), die dazu konfiguriert ist, einen Identifikatorsatz auf der Grundlage der ersten Informationen zu bestimmen, wobei der Identifikatorsatz Identifikatoren von N Endgeräten umfasst, die N Endgeräte mindestens das erste Endgerät umfassen und N eine positive ganze Zahl ist; und
eine Sendeeinheit (501), die dazu konfiguriert ist, N erste Anforderungsnachrichten an ein zweites Netzelement (600) zu senden, wobei die N ersten Anforderungsnachrichten die Identifikatoren der N Endgeräte tragen und verwendet werden, um das zweite Netzelement (600) anzufordern, Standortinformationen der N Endgeräte zu bestimmen;
wobei die Erhaltungseinheit (502) ferner dazu konfiguriert ist, N erste Antwortnachrichten von dem zweiten Netzelement (600) zu empfangen, wobei die N ersten Antwortnachrichten die Standortinformationen der N Endgeräte tragen; und
die Verarbeitungseinheit (503) ferner dazu konfiguriert ist, einen Identifikator des ersten Endgeräts (121) in dem Identifikatorsatz durch Bestimmen, welcher dritte Standort in mindestens einem dritten Standort, der durch die Standortinformationen der N Endgeräte spezifiziert ist, dem ersten Standort, der durch die Standortinformationen des ersten Endgeräts spezifiziert ist, am nächsten liegt, und Verwenden eines Identifikators eines Endgeräts, das den dritten Standortinformationen entspricht, als den Identifikator des ersten Endgeräts, zu bestimmen;
wobei
der Identifikator des ersten Endgeräts (121) ein Identifikator ist, der von dem ersten Endgerät (121) zur Kommunikation verwendet wird, und Kommunikationsinformationen des ersten Endgeräts (121) auf der Grundlage des Identifikators des ersten Endgeräts erhalten werden können;
wobei das erste Netzelement (500) ein Netzelement einer Mobilitätsmanagementinstanz in einem Kernnetz ist;
wobei Standortinformationen jedes Endgeräts (121) in den Standortinformationen der N Endgeräte Positionspräzisionsinformationen umfassen.

6. Erstes Netzelement (500) nach Anspruch 5, wobei die ersten Informationen ferner Statusinformationen des ersten Endgeräts tragen und die Statusinformationen des ersten Endgeräts (121) verwendet werden, um einen Status des ersten Endgeräts anzugeben; und
die Verarbeitungseinheit (503) dazu konfiguriert ist, auf der Grundlage der Standortinformationen des ersten Endgeräts, mindestens ein Netzgerät an mindestens einem zweiten Standort zu bestimmen, das eine voreingestellte Bedingung erfüllt, wobei ein erster Standort durch die Standortinformationen des ersten Endgeräts angegeben ist; und
die Verarbeitungseinheit (503) dazu konfiguriert ist, M Endgeräte zu bestimmen, die auf dem mindestens einen Netzgerät campen, in den M Endgeräten N Endgeräte bestimmt, deren Status konsistent mit dem Status sind, der durch die Statusinformationen des ersten Endgeräts angegeben ist, und die Identifikatoren der N Endgeräte erhält, um den Identifikatorsatz zu bilden, wobei M eine positive ganze Zahl größer oder gleich N ist.

7. Erstes Netzelement (500) nach Anspruch 5 oder 6, wobei:
die Erhaltungseinheit (502) dazu konfiguriert ist, eine zweite Anforderungsnachricht von einem dritten Netzelement (700) zu empfangen, wobei die zweite Anforderungsnachricht verwendet wird, um den Identifikator des ersten Endgeräts anzufordern, und die zweite Anforderungsnachricht die ersten Informationen umfasst.

8. Erstes Netzelement (500) nach einem der Ansprüche 5 bis 7, wobei:
die Verarbeitungseinheit (503) dazu konfiguriert ist, einen ersten Identifikatorsatz auf der Grundlage erster Erstinformationen zu bestimmen, wobei der erste Identifikatorsatz Identifikatoren von X Endgeräten umfasst, die X Endgeräte mindestens das erste Endgerät umfassen, X eine positive ganze Zahl größer oder gleich N ist,
die ersten Erstinformationen erste Informationen sind, die durch die Erhaltungseinheit (502) zu einem ersten Zeitpunkt erhalten werden, und die ersten Erstinformationen Standortinformationen des ersten Endgeräts (121) zu dem ersten Zeitpunkt tragen;
die Verarbeitungseinheit (503) dazu konfiguriert ist, einen zweiten Identifikatorsatz auf der Grundlage zweiter Erstinformationen zu bestimmen, wobei der zweite Identifikatorsatz Identifikatoren von Y Endgeräten umfasst, die Y Endgeräte mindestens das erste Endgerät umfassen, Y eine positive ganze Zahl größer oder gleich N ist,
die zweiten Erstinformationen erste Informationen sind, die durch die Erhaltungseinheit (502) zu einem zweiten Zeitpunkt erhalten werden, und die zweiten Erstinformationen Standortinformationen des ersten Endgeräts (121) zu dem zweiten Zeitpunkt tragen; und
die Verarbeitungseinheit (503) dazu konfiguriert ist, einen Schnittmengensatz des ersten Identifikatorsatzes und des zweiten Identifikatorsatzes als den Identifikatorsatz zu bestimmen.

9. System zum Erhalten eines Identifikators eines Endgeräts, umfassend mindestens ein erstes Netzelement (500) nach einem der Ansprüche 5 bis 8 und mindestens ein zweites Netzelement (600); wobei das zweite Netzelement Folgendes umfasst:
eine Empfangseinheit (601), die dazu konfiguriert ist, N erste Anforderungsnachrichten von einem ersten Netzelement (500) zu empfangen, wobei die N ersten Anforderungsnachrichten Identifikatoren von N Endgeräten tragen und verwendet werden, um das zweite Netzelement (600) anzufordern, Standortinformationen der N Endgeräte zu bestimmen;
eine Verarbeitungseinheit (603), die zu Folgendem konfiguriert ist: getrenntes Erhalten, durch Berechnung, der Standortinformationen der N Endgeräte auf der Grundlage der N ersten Anforderungsnachrichten unter Verwendung eines voreingestellten Positionierungsalgorithmus; und
eine Sendeeinheit (601), die dazu konfiguriert ist, N erste Antwortnachrichten an das erste Netzelement (500) zu senden, wobei die N ersten Antwortnachrichten die Standortinformationen der N Endgeräte tragen, wobei
die Identifikatoren der Endgeräte Identifikatoren sind, die von den Endgeräten zur Kommunikation verwendet werden, und Kommunikationsinformationen der Endgeräte auf der Grundlage der Identifikatoren der Endgeräte erhalten werden;
wobei das zweite Netzelement (600) ein Netzelement ist, das dazu konfiguriert ist, einen Positionierungsalgorithmus in einem Kernnetz durchzuführen;
wobei Standortinformationen jedes Endgeräts in den Standortinformationen der N Endgeräte Positionspräzisionsinformationen umfassen.

10. Computerlesbares Speichermedium, umfassend ein Computerprogramm, wobei bei Ausführung des Computerprogramms auf einem Computer der Computer dazu befähigt wird, das Verfahren zum Erhalten eines Identifikators eines Endgeräts (121) nach einem der Ansprüche 1 bis 4 durchzuführen.

## Revendications

1. Procédé d'obtention d'un identifiant d'un dispositif terminal, comprenant :
l'obtention, par un premier élément de réseau (500), de premières informations, dans lequel les premières informations portent des informations d'emplacement d'un premier dispositif terminal ;
la détermination, par le premier élément de réseau (500), d'un ensemble d'identifiants sur la base des premières informations, dans lequel l'ensemble d'identifiants comprend des identifiants de N dispositifs terminaux, les N dispositifs terminaux comprennent au moins le premier dispositif terminal, et N est un entier positif ;
l'envoi, par le premier élément de réseau (500), de N premiers messages de demande à un deuxième élément de réseau (600), dans lequel les N premiers messages de demande portent les identifiants des N dispositifs terminaux, et sont utilisés pour demander au deuxième élément de réseau (600) de déterminer des informations d'emplacement des N dispositifs terminaux ;
la réception, par le premier élément de réseau (500), de N premiers messages de réponse du deuxième élément de réseau (600), dans lequel les N premiers messages de réponse portent les informations d'emplacement des N dispositifs terminaux ; et
la détermination, par le premier élément de réseau (500), d'un identifiant du premier dispositif terminal (121) dans l'ensemble d'identifiants en déterminant quel troisième emplacement dans au moins un troisième emplacement spécifié par les informations d'emplacement des N dispositifs terminaux est le plus proche du premier emplacement spécifié par les informations d'emplacement du premier dispositif terminal, et l'utilisation d'un identifiant d'un dispositif terminal correspondant aux troisièmes informations d'emplacement comme étant l'identifiant du premier dispositif terminal ;
dans lequel l'identifiant du premier dispositif terminal (121) est un identifiant utilisé par le premier dispositif terminal (121) pour la communication, et des informations de communication du premier dispositif terminal (121) peuvent être obtenues sur la base de l'identifiant du premier dispositif terminal ;
dans lequel le premier élément de réseau (500) est un élément de réseau d'entité de gestion de mobilité dans un réseau central ;
dans lequel le deuxième élément de réseau (600) est un élément de réseau qui exécute un algorithme de positionnement dans le réseau central ;
dans lequel des informations d'emplacement de chaque dispositif terminal dans les informations d'emplacement des N dispositifs terminaux comprennent des informations de précision de positionnement.

2. Procédé selon la revendication 1, dans lequel les premières informations portent en outre des informations d'état du premier dispositif terminal, et les informations d'état du premier dispositif terminal (121) sont utilisées pour indiquer un état du premier dispositif terminal ; et
la détermination, par le premier élément de réseau (500), d'un ensemble d'identifiants sur la base des premières informations comprend :
la détermination, par le premier élément de réseau (500) sur la base des informations d'emplacement du premier dispositif terminal, d'au moins un dispositif réseau dans au moins un deuxième emplacement qui satisfait une condition prédéfinie avec un premier emplacement indiqué par les informations d'emplacement du premier dispositif terminal ; et
la détermination, par le premier élément de réseau (500), de M dispositifs terminaux qui sont domiciliés sur l'au moins un dispositif réseau, la détermination, dans les M dispositifs terminaux, de N dispositifs terminaux dont les états sont cohérents avec l'état indiqué par les informations d'état du premier dispositif terminal, et l'obtention des identifiants des N dispositifs terminaux pour former l'ensemble d'identifiants, dans lequel M est un entier positif supérieur ou égal à N.

3. Procédé selon la revendication 1 ou 2, dans lequel l'obtention, par un premier élément de réseau (500), de premières informations comprend :
la réception, par le premier élément de réseau (500), d'un deuxième message de demande d'un troisième élément de réseau (700), dans lequel le deuxième message de demande est utilisé pour demander l'identifiant du premier dispositif terminal, et
le deuxième message de demande comprend les premières informations.

4. Procédé selon l'une quelconque des revendications 1 à 3, dans lequel la détermination, par le premier élément de réseau (500), d'un ensemble d'identifiants sur la base des premières informations comprend :
la détermination, par le premier élément de réseau (500), d'un premier ensemble d'identifiants sur la base de premières premières-informations, dans lequel le premier ensemble d'identifiants comprend des identifiants de X dispositifs terminaux, les X dispositifs terminaux comprennent au moins le premier dispositif terminal, X est un entier positif supérieur ou égal à N, les premières premières-informations sont des premières informations obtenues par le premier élément de réseau (500) à un premier instant, et les premières premières-informations portent des informations d'emplacement du premier dispositif terminal (121) au premier instant ;
la détermination, par le premier élément de réseau (500), d'un deuxième ensemble d'identifiants sur la base de deuxièmes premières-informations, dans lequel le deuxième ensemble d'identifiants comprend des identifiants de Y dispositifs terminaux, les Y dispositifs terminaux comprennent au moins le premier dispositif terminal, Y est un entier positif supérieur ou égal à N, les deuxièmes premières-informations sont des premières informations obtenues par le premier élément de réseau (500) à un deuxième instant, et les deuxièmes premières-informations portent des informations d'emplacement du premier dispositif terminal (121) au deuxième instant ; et
la détermination, par le premier élément de réseau (500), d'un ensemble d'intersection du premier ensemble d'identifiants et du deuxième ensemble d'identifiants comme étant l'ensemble d'identifiants.

5. Premier élément de réseau (500), comprenant :
une unité d'obtention (502), configurée pour obtenir des premières informations, dans lequel les premières informations portent des informations d'emplacement d'un premier dispositif terminal ;
une unité de traitement (503), configurée pour déterminer un ensemble d'identifiants sur la base des premières informations, dans lequel l'ensemble d'identifiants comprend des identifiants de N dispositifs terminaux, les N dispositifs terminaux comprennent au moins le premier dispositif terminal, et N est un entier positif ; et
une unité d'envoi (501), configurée pour envoyer N premiers messages de demande à un deuxième élément de réseau (600), dans lequel les N premiers messages de demande portent les identifiants des N dispositifs terminaux, et sont utilisés pour demander au deuxième élément de réseau (600) de déterminer des informations d'emplacement des N dispositifs terminaux ;
l'unité d'obtention (502) est en outre configurée pour recevoir N premiers messages de réponse du deuxième élément de réseau (600), dans lequel les N premiers messages de réponse portent les informations d'emplacement des N dispositifs terminaux ; et l'unité de traitement (503) est en outre configurée pour déterminer un identifiant du premier dispositif terminal (121) dans l'ensemble d'identifiants en déterminant quel troisième emplacement dans au moins un troisième emplacement spécifié par les informations d'emplacement des N dispositifs terminaux est le plus proche du premier emplacement spécifié par les informations d'emplacement du premier dispositif terminal, et utiliser un identifiant d'un dispositif terminal correspondant aux troisièmes informations d'emplacement comme étant l'identifiant du premier dispositif terminal ;
dans lequel
l'identifiant du premier dispositif terminal (121) est un identifiant utilisé par le premier dispositif terminal (121) pour la communication, et des informations de communication du premier dispositif terminal (121) peuvent être obtenues sur la base de l'identifiant du premier dispositif terminal ;
dans lequel le premier élément de réseau (500) est un élément de réseau d'entité de gestion de mobilité dans un réseau central ;
dans lequel des informations d'emplacement de chaque dispositif terminal (121) dans les informations d'emplacement des N dispositifs terminaux comprennent des informations de précision de positionnement.

6. Premier élément de réseau (500) selon la revendication 5, dans lequel les premières informations portent en outre des informations d'état du premier dispositif terminal, et les informations d'état du premier dispositif terminal (121) sont utilisées pour indiquer un état du premier dispositif terminal ; et
l'unité de traitement (503) est configurée pour déterminer, sur la base des informations d'emplacement du premier dispositif terminal, au moins un dispositif réseau dans au moins un deuxième emplacement qui satisfait une condition prédéfinie avec un premier emplacement indiqué par les informations d'emplacement du premier dispositif terminal ; et
l'unité de traitement (503) est configurée pour déterminer M dispositifs terminaux qui sont domiciliés sur l'au moins un dispositif réseau, détermine, dans les M dispositifs terminaux, N dispositifs terminaux dont les états sont cohérents avec l'état indiqué par les informations d'état du premier dispositif terminal, et obtient les identifiants des N dispositifs terminaux pour former l'ensemble d'identifiants, dans lequel M est un entier positif supérieur ou égal à N.

7. Premier élément de réseau (500) selon la revendication 5 ou 6, dans lequel :
l'unité d'obtention (502) est configurée pour recevoir un deuxième message de demande d'un troisième élément de réseau (700), dans lequel le deuxième message de demande est utilisé pour demander l'identifiant du premier dispositif terminal, et le deuxième message de demande comprend les premières informations.

8. Premier élément de réseau (500) selon l'une quelconque des revendications 5 à 7, dans lequel :
l'unité de traitement (503) est configurée pour déterminer un premier ensemble d'identifiants sur la base de premières premières-informations, dans lequel le premier ensemble d'identifiants comprend des identifiants de X dispositifs terminaux, les X dispositifs terminaux comprennent au moins le premier dispositif terminal, X est un entier positif supérieur ou égal à N,
les premières premières-informations sont des premières informations obtenues par l'unité d'obtention (502) à un premier instant, et les premières premières-informations portent des informations d'emplacement du premier dispositif terminal (121) au premier instant ;
l'unité de traitement (503) est configurée pour déterminer un deuxième ensemble d'identifiants sur la base de deuxièmes premières-informations, dans lequel le deuxième ensemble d'identifiants comprend des identifiants de Y dispositifs terminaux, les Y dispositifs terminaux comprennent au moins le premier dispositif terminal, Y est un entier positif supérieur ou égal à N,
les deuxièmes premières-informations sont des premières informations obtenues par l'unité d'obtention (502) à un deuxième instant, et les deuxièmes premières-informations portent des informations d'emplacement du premier dispositif terminal (121) au deuxième instant ; et
l'unité de traitement (503) est configurée pour déterminer un ensemble d'intersection du premier ensemble d'identifiants et du deuxième ensemble d'identifiants comme étant l'ensemble d'identifiants.

9. Système d'obtention d'un identifiant d'un dispositif terminal, comprenant au moins un premier élément de réseau (500) selon l'une quelconque des revendications 5 à 8 et au moins un deuxième élément de réseau (600) ;
le deuxième élément de réseau comprenant :
une unité de réception (601), configurée pour recevoir N premiers messages de demande d'un premier élément de réseau (500), dans lequel les N premiers messages de demande portent des identifiants de N dispositifs terminaux, et sont utilisés pour demander au deuxième élément de réseau (600) de déterminer des informations d'emplacement des N dispositifs terminaux ;
une unité de traitement (603), configurée pour : obtenir séparément, par calcul, les informations d'emplacement des N dispositifs terminaux sur la base des N premiers messages de demande en utilisant un algorithme de positionnement prédéfini ; et
une unité d'envoi (601), configurée pour envoyer N premiers messages de réponse au premier élément de réseau (500), dans lequel les N premiers messages de réponse portent les informations d'emplacement des N dispositifs terminaux, dans lequel
les identifiants des dispositifs terminaux sont des identifiants utilisés par les dispositifs terminaux pour la communication, et les informations de communication des dispositifs terminaux sont obtenues sur la base des identifiants des dispositifs terminaux ;
dans lequel le deuxième élément de réseau (600) est un élément de réseau configuré pour exécuter un algorithme de positionnement dans un réseau central ;
dans lequel des informations d'emplacement de chaque dispositif terminal dans les informations d'emplacement des N dispositifs terminaux comprennent des informations de précision de positionnement.

10. Support de stockage lisible par ordinateur, comprenant un programme informatique, dans lequel, lorsque le programme informatique est exécuté sur un ordinateur, l'ordinateur est capable de mettre en œuvre le procédé d'obtention d'un identifiant d'un dispositif terminal (121) selon l'une quelconque des revendications 1 à 4.
